# EUROPÄISCHE PATENTSCHRIFT

(11) **EP 4 264 065 B1**
(45) Veröffentlichungstag und Bekanntmachung des Hinweises auf die Patenterteilung: **30.07.2025**
(21) Anmeldenummer: 21844652.4
(22) Anmeldetag: 21.12.2021
(51) Int. Cl.: F16B 33/00, B29C 45/14, B29C 45/26, B29C 45/00

(54) **SCHRAUBTEIL MIT RINGFÖRMIGEM QUERSCHNITT**
SCREW PART HAVING ANNULAR CROSS-SECTION
PIÈCE DE VIS À SECTION TRANSVERSALE ANNULAIRE

(30) Priorität: 21.12.2020 DE 102020134501
(43) Veröffentlichungstag der Anmeldung: 25.10.2023
(73) Patentinhaber: Voss Automotive GmbH, 51688 Wipperfürth (DE)
(72) Erfinder: BERGER, Markus, 51688 Wipperfürth (DE); HAGEN, Harald, 51688 Wipperfürth (DE); DE BEER, Daniel, 51766 Engelskirchen (DE); SIEPER, Günter, 42853 Remscheid (DE); MITTERER, Reiner, 51688 Wipperfürth (DE); DIEDERICHS, Peter, 51709 Marienheide (DE); JOHNEN, Martin, 51688 Wipperfürth (DE); ROSOWSKI, Evelin, 51688 Wipperfürth (DE)
(74) Vertreter: Dr. Solf & Zapf Patent- und Rechtsanwalts PartG mbB
(86) Internationale Anmeldenummer: PCT/EP2021/087048
(87) Internationale Veröffentlichungsnummer: WO 2022/136406

(56) Entgegenhaltungen:
- WO-A1-2013/092234
- WO-A1-2015/158805
- DE-A1- 102006 051 774
- US-A1- 2014 157 568

## Beschreibung

Die Erfindung betrifft ein Schraubteil mit einem ringförmigen Querschnitt, insbesondere eine Hohlschraube oder eine Mutter. Das Schraubteil weist einen hohlzylindrischen und zumindest teilweise aus einer Fasern enthaltenden plastifizierten polymeren Masse spritzgegossenen Grundkörper auf. Der Grundkörper weist mindestens ein Innengewinde und/oder ein Außengewinde und einen Innenkanal zur Anordnung und/oder Durchführung eines Leitungssystemelements in eine Einsteckrichtung auf. Der Innenkanal hat zumindest einen Dichtabschnitt zur Anordnung einer Umfangsdichtung zur Abdichtung zwischen Innenkanal und Leitungssystemelement und/oder zumindest einen Stützabschnitt zur Stützung und/oder Führung des Leitungssystemelements und/oder zumindest einen Halteabschnitt zur direkten oder indirekten Arretierung des Leitungssystemelements ausgebildet.

Weiterhin betrifft die Erfindung ein Verfahren zur Herstellung eines derartigen Schraubteils.

Derartige Schraubteile adaptieren eine genormte Gewindebohrung, insbesondere ISO 4039-2 oder ISO 6149, auf eine Kontur, in die ein Leitungssystemelement, insbesondere ein Steckerteil eines Steckverbinders, eingesteckt wird. Alternativ werden derartige Schraubteile auch für eine Gewindereduzierung verwendet.

Aus der WO 2013/092234 A1 ist ein gattungsgemäßes Schraubteil sowie ein Verfahren zu dessen Herstellung bekannt. Hierbei ist der Innenkanal in verschiedene axial aneinandergereihte Funktionsabschnitte unterteilt zur Anlage einer Umfangsdichtung, zur direkten oder indirekten Halterung und/oder Arretierung eines als Steckerteil ausgebildeten Leitungssystemelements und/oder zur Stützung und/oder Führung des Steckerteils. Mittels eines bestimmten Herstellungsverfahrens ermöglicht die WO 2013/092234 A1, das Schraubteil mit einer erhöhten Festigkeit, insbesondere mit erhöhter axialer Zugfestigkeit, herzustellen. Diesbezüglich ist vorgesehen, dass bei der Herstellung der Anguss zum Innenkanal weisend und in einem Abschnitt des Innenkanals erfolgt, der nicht der Anlage einer Umfangsdichtung oder der Halterung und/oder Arretierung des in das Schraubteil einführbaren Steckerteils dient. Insbesondere kommt es durch ein lokal unterschiedliches Schwindungsverhalten beim Erstarren der polymeren Masse zu Verformungen, welche insbesondere die Montage erschweren, und/oder zu einem ungleichmäßigen Spannungsverlauf bei Belastungen.

Um ein verbessertes Spannungsverhalten zu erhalten, offenbart die WO 2015/158805 A1 ein gattungsgemäßes Schraubteil, wobei hier in einem Bereich des Gewindes, der jeweils - durch die Wand des Grundkörpers getrennt - dem Bereich der Anspritzstelle gegenüberliegt, eine Aussparung erzeugt wird, welche die Verteilung der polymeren Masse insbesondere in den gewindeführenden Bereichen des Schraubteils optimiert.

Auch wenn die WO 2015/158805 A1 ein Schraubteil offenbart, welches im Vergleich zu dem aus der WO 2013/092234 A1 bekannten Schraubteil ein geringeres Ausmaß der Verformung und ein besseres Spannungsverhalten bei einer Belastung aufweist, kommt es sowohl bei dem Schraubteil aus der WO 2015/158805 A1 als auch bei dem Schraubteil gemäß der WO 2013/092234 A1 zu einem hohen Materialverlust, da beide Methoden eine hohe Anzahl an Angüssen vorsehen. Weiterhin neigt das Schraubteil der WO 2015/158805 A1 trotz des verbesserten Schwindungsverhaltens zu unrunden Verformungen, so dass auch weiterhin das Schraubteil eine relativ große Fertigungstoleranz aufweist.

Weiterhin weisen die aus dem Stand der Technik bekannten Schraubteile regelmäßig im Durchmesser reduzierte Nuten, beispielsweise zur Anordnung von Dichtelementen, auf. Diese Nut erzeugt eine Schwächungsstelle, insbesondere zwischen einer Antriebskontur und einem Gewindeabschnitt. Bei einem Verschrauben des Schraubteils mit einem für die Selbsthaltung und Abdichtung notwendigen Drehmoment kann das Schraubteil auf Grund der Schwächungsstelle nicht genügend Widerstand gegen das Drehmoment generieren und, insbesondere im Bereich der Schwächungsstelle, abreißen. Da die Größe eines zum Schraubteil korrespondierend ausgebildeten Gewindes eines Gegenelements regelmäßig vorgegeben ist, ist auch eine Querschnittsvergrößerung im Bereich der Schwächungsstelle meist nicht möglich. Weiterhin kann es nach dem Anziehen der Verbindung mit genügendem Anzugsmoment durch Relaxation des Kunststoffmaterials zu einem ungewolltem Lösen der Verbindung kommen.

Der Erfindung liegt die Aufgabe zugrunde, ein Schraubteil, welches die aus dem Stand der Technik bekannten Nachteile vermeidet und insbesondere ein hohes Drehmoment und eine niedrige Fertigungstoleranz aufweist, sowie ein Herstellungsverfahren für ein derartigen Schraubteil zur Verfügung zu stellen.

Die Aufgabe wird erfindungsgemäß durch die Merkmale des Anspruchs 1 gelöst. Die Aufgabe wird erfindungsgemäß ebenfalls durch die Merkmale des Anspruchs 3 gelöst.

Die erfindungsgemäßen Merkmale ermöglichen es, mittels der umspritzten Einlegehülse ein Schraubteil zur Verfügung zu stellen, welches in der Herstellung kostengünstig ist und optimierte Eigenschaften zur Erfüllung der Anforderungen an ein übertragbares Drehmoment und Rundheit erfüllt.

Weiterhin weist das erfindungsgemäße Schraubteil ein reduziertes Kriechverhalten auf. Vorteilhaft weist das Schraubteil dadurch z. B. im Vergleich zu bekannten spritzgegossenen Schraubteilen einen reduzierten Vorspannkraftverlust auf, weil in einem kritischen Querschnitt des Schraubteils, insbesondere im Bereich einer Nut in dem Innenkanal, die axiale Vorspannkraft über die Einlegehülse aufgenommen und gehalten wird.

Weiterhin kann mittels der Einlegehülse einer symmetrischen Faserausrichtung vorgebeugt werden, wobei mittels der Struktur der Einlegehülse beim Spritzgießen des Grundkörpers eine homogene Durchmischung der Fasern und der Faserorientierung im Bauteil erreicht wird. In der Folge ist die Faserorientierung, vorteilhaft für Lastfälle, über den gesamten Grundkörper asymmetrisch. Insbesondere werden dadurch die Anbindung und die mechanischen Eigenschaften des Schraubteils verbessert.

Ein weiterer Vorteil der homogenen, asymmetrisch angeordneten Fasern im Grundkörper besteht darin, dass weniger Anspritzpunkte notwendig sind, um den Grundkörper als Spritzgussteil zu fertigen, als beim Stand der Technik. Bei den Schraubteilen aus dem Stand der Technik sind regelmäßig mehrere Anspritzpunkte notwendig, da die Fasern bei der Ausbreitung der plastifizierten Masse in einer Kavität eines Formwerkzeugs dazu neigen, sich in einer Strömungsrichtung symmetrisch anzuordnen. Beim Stand der Technik wird diesem Effekt mittels der Verwendung von einer Mehrzahl an Anspritzpunkten vorgebeugt. Insbesondere ermöglicht die mit der Einlegehülse erzeugte homogene asymmetrische Anordnung der Fasern, dass nur ein Anspritzpunkt ausreicht, um den Grundkörper vollständig zu spritzen. Vorteilhaft wird dadurch Material gespart, welches im Anguss zu jedem Anspritzpunkt als Ausschuss anfällt. Weiterhin ist auch ein Heißkanalsystem zum Spritzgießen dazu geeignet, das erfindungsgemäße Schraubteil herzustellen, wodurch im Vergleich zu herkömmlichen unbeheizten Spritzgießsystemen noch einmal weniger Ausschuss anfällt.

Insbesondere bedeutet, dass der Grundkörper zumindest teilweise aus einer Fasern enthaltenden plastifizierten polymeren Masse spritzgegossen ist, im erfindungsgemäßen Sinne, dass der Grundkörper lediglich aus der polymeren Masse und der umspritzten Einlegehülse gebildet ist und insbesondere keine weiteren Fremdkörper, wie z. B. eine Gewindebuchse/hülse, aufweist. Zweckmäßig ist/sind das/die Gewinde aus der faserhaltigen polymeren Masse gebildet.

Insbesondere weist der Grundkörper einen sich axial erstreckenden Montageabschnitt und einen sich axial erstreckenden Gewindeabschnitt auf. Zweckmäßig weist der Grundkörper im Montageabschnitt einen Kraftangriff und insbesondere auf einer Außenwand im Gewindeabschnitt ein Außengewinde auf. Vorteilhaft ist die Einlegehülse im Grundkörper zumindest teilweise in dem Montageabschnitt und zumindest teilweise in dem Gewindeabschnitt angeordnet. Vorteilhaft kann dadurch ein auf den Kraftangriff aufgebrachtes hohes Drehmoment bis in den Gewindeabschnitt, insbesondere ohne einen Abriss des Schraubteils, übertragen werden.

In diesem Sinne ist es weiterhin vorteilhaft, wenn die Einlegehülse derart ausgebildet und in der polymeren Masse angeordnet ist, dass sich die Einlegehülse zumindest über alle funktionellen Abschnitte des Innenkanals, sofern vorhanden, erstreckt. Zweckmäßig erstreckt sich die Einlegehülse insbesondere über zumindest einen Dichtabschnitt, zumindest einen Stützabschnitt und zumindest einen Halteabschnitt.

Vorteilhaft weist die Einlegehülse in einer Aufsicht axial zum Innenkanal ein umfänglich geschlossenes Ringprofil auf. Bei dem Schraubteil wirkt, insbesondere wegen des Gewindes, beim Verschrauben ein radial zur Einlegehülse gerichteter Druck. Um ein radiales Zusammendrücken bzw. ein radiales Aufweiten zu verhindern, ist die vorteilhafte Einlegehülse wegen ihres zweckmäßig geschlossenen Ringprofils besonders geeignet.

In einer weiteren Variante der Erfindung weist die Einlegehülse umfangsgemäß in einer Umfangswandung verteilte Öffnungen auf. Besonders vorteilhaft hat es sich gezeigt, wenn die Öffnungen einen Öffnungsanteil von mindestens 30 % der Umfangswandung einnehmen. Mittels der Öffnungen wird die Einlegehülse von der plastifizierten polymeren Masse vorteilhaft auch in den Öffnungen umspritzt. Vorteilhaft ist die Einlegehülse dadurch formschlüssig in der polymeren Masse angeordnet. In einem weiteren vorteilhaften Aspekt verbessern die Öffnungen die Durchmischung der Faserausrichtung.

Eine zweckmäßige Ausgestaltung der Öffnungen sieht vor, dass eine Wandstärke der Einlegehülse bzw. der Umfangswandung und/oder eine Größe der Öffnungen größer oder gleich groß ist als/wie eine Faserlänge der in der polymeren Masse enthaltenen Fasern.

Vorzugsweise sind die Öffnungen als kreisförmige Löcher ausgebildet, wobei die Löcher zweckmäßig einen Lochkreisdurchmesser im Bereich von 1 mm bis 3 mm, vorzugsweise im Bereich von 1,5 mm bis 2,5 mm, aufweisen.

Gemäß einer Ausführung der Einlegehülse ist diese als ein Blechteil ausgebildet, welches insbesondere eine hohlzylindrische Form aufweist. Vorteilhaft kann die Einlegehülse als Blechteil kostengünstig hergestellt und an individuelle Bedürfnisse wie Durchmesser, Wandstärke und/oder Öffnungsanteil angepasst werden.

Eine alternative Ausführung der Einlegehülse sieht vor, dass die Einlegehülse als ein skelettartiges Tragwerk mit Stützen und Trägern ausgebildet ist. Darunter fallen insbesondere auch netzartige Gitterstrukturen. Vorzugsweise sind die Öffnungen als Polygone von den Stützen und Trägern umschlossen ausgebildet und weisen daher insbesondere eine eckige Form auf. Zweckmäßig ist die Einlegehülse aus dem skelettartigen Tragwerk ebenfalls als ein Biegeteil ausgebildet und in die Hülsenform um eine zentrale Hülsenachse gebogen. Insbesondere ist die Einlegehülse mit der zentralen Hülsenachse bei dem gefertigten Schraubteil koaxial zum Innenkanal 6 angeordnet.

Bevorzugt ist die Einlegehülse aus einem zu einer Hülse um die zentrale Hülsenachse gebogenen Biegeteil gebildet. Vorzugsweise greifen dabei zwei zusammengebogene Außenkanten des Biegeteils jeweils mit einer Kontur zum gegenseitigen Verbinden formschlüssig ineinander. Diese Ausführung kann sowohl bei einer Ausführung der Einlegehülse als Blechteil, als auch bei einer Ausführung als skelettartiges Tragwerk vorteilhaft umgesetzt werden. Insbesondere wird mit der formschlüssigen Verbindung der Außenkanten ein geschlossenes Ringprofil erzeugt, wobei sich die Außenkanten aufeinander abstützen können, so dass insbesondere ein radiales Eindrücken und/oder ein radiales Aufweiten verhindert wird.

Gemäß einer weiteren Variante sind alternativ oder ergänzend zu der formschlüssigen Verbindung der Außenkanten mittels einer Kontur, die zwei zusammengebogenen Außenkanten des Biegeteils stoffschlüssig, insbesondere durch Schweißen, miteinander verbunden. Ein ungewolltes Lösen der Außenkanten voneinander wird dadurch effektiv verhindert.

Gemäß einer weiteren Ausführung ist die Einlegehülse als Biegeteil insbesondere als ein gelochtes Tiefziehteil ausgebildet, so dass insbesondere ein Verbinden der Außenkanten entfällt.

Zweckmäßig ist die Einlegehülse in einer besonderen Ausführungsform sich konusartig in die Einsteckrichtung weisend im Durchmesser verjüngend ausgebildet. Durch die konusförmige Einlegehülse entsteht eine gleichmäßigere Wandstärke über die gesamte Längsachse des Grundkörpers, insbesondere besonders auf der zum Innenkanal weisenden Seite der Einlegehülse.

In einer weiteren Variante der Erfindung hat die Einlegehülse zumindest an einem axialen Ende zumindest zwei, vorzugsweise drei oder mehr über den Umfang der Einlegehülse verteilte und insbesondere zum Innenkanal weisende, Stege ausgebildet. Vorzugsweise ist die Gesamtanzahl der Stege derart groß, dass sich ein nahezu geschlossener Kreis bildet. Zweckmäßig verbessern die Stege die Anordnung der Einlegehülse in der polymeren Masse. Insbesondere ragen die Stege bzw. ragt ein Teil der Stege jeweils mit einem Endabschnitt aus der polymeren Masse heraus. Die Endabschnitte dienen vorzugsweise der Anordnung, insbesondere der axialen und radialen Positionierung und Klemmung der Einlegehülse innerhalb der Kavität des Formwerkzeugs.

Die Einleghülse ist insbesondere vorteilhaft für die Herstellung des Grundkörpers mittels eines Formwerkzeug, welches einen mehrteiligen Kern aufweist. Wenn die Kernteile axial zum Innenkanal des zu fertigenden Schraubteils bei dem Einspritzen der plastifizierten polymeren Masse in die Kavität nebeneinander angeordnet sind, kann die Einlegehülse zwischen einem ersten Kernteil mit einem geringsten Durchmesser und einem zweiten Kernteil mit einem größeren Durchmesser lagesicher angeordnet werden.

Zweckmäßig hat es sich für die Funktionen der einzelnen Abschnitte des Innenkanals als vorteilhaft erwiesen, wenn die Endabschnitte der Stege in dem Stützabschnitt oder einem funktionslosen Abschnitt aus der polymeren Masse herausragen. Zweckmäßig ist dieser Stützabschnitt oder der funktionslose Abschnitt des Innenkanals axial benachbart zu dem Dichtabschnitt und/oder dem Halteabschnitt angeordnet und dient insbesondere nicht der Anlage einer Umfangsdichtung oder der Arretierung des Leitungssystemelements.

Insbesondere um die Funktionen des jeweiligen Abschnitts des Innenkanals nicht zu beeinträchtigen und vorteilhaft die Komplexität des Formwerkzeugs zu optimieren, ist in einer Umfangsfläche des Innenkanals zumindest eine axial verlaufende Nut ausgebildet, in der einer der Stege aus einem Nutgrund herausragt. Bevorzugt weist der Steg maximal eine radiale Höhe auf, welche einer Tiefe der Nut entspricht. Insbesondere ragt der Steg dadurch nicht derartig in den Innenkanal, dass ein Leitungssystemelement, welches in dem Innenkanal angeordnet und/oder arretiert werden soll, in einen Materialkontakt mit einem oder mehreren der Stege kommt.

Ergänzend oder alternativ zu den zum Innenkanal weisenden Stegen sieht es eine besondere Variante der Erfindung vor, dass zumindest ein Steg radial vom Innenkanal nach außen weisend ausgebildet ist. Zweckmäßig ist ebenfalls, dass ein Steg axial zum Innenkanal weisend ausgebildet ist. Da die Stege außen abgewinkelt sind und/oder senkrecht in Einsteckrichtung von der Hülse abstehen, treten die Kontaktflächen zu dem Formwerkzeug, insbesondere den Schiebern und dem Kernteil, an anderen Stellen aus der polymeren Masse aus, als bei den vorhergehend beschriebenen, zum Innenkanal weisend ausgebildeten Stegen. Zweckmäßig ist diese Ausführung besonders bei Senkrecht-Spritzgussmaschinen vorteilhaft. Das produzieren mit einer Senkrecht-Spritzgussmaschine hat gegenüber einer Waagerecht-Spritzgussmaschine den besonderen Vorteil, dass die Einlegeteile, durch die Schwerkraft, nicht einseitig auf dem Dorn aufliegen liegen. Mit einer Senkrecht-Spritzgussmaschine ist vorteilhafter Weise eine mittige Lagerung des Einlegeteils einfacher.

Gemäß der vorteilhaften Ausführung der Einlegehülse können sich die nach außen weisenden Stege in den äußeren Schiebern abstützen und insbesondere an zumindest einer sich teilweise in Einsteckrichtung weisenden Schrägfläche der Schieber im Formwerkzeug beim Spritzgießen axial gesichert werden. Weiterhin ermöglichen die sich axial erstreckenden Stege eine sehr genaue Positionierung der Einlegehülse im Formwerkzeug, indem die Stege vorzugsweise auf dem Kernteil des Formwerkzeugs aufliegen können. Zwecks einer besseren Füllung des Grundkörpers mit der polymeren Masse sieht eine verbesserte Variante vor, dass die sich axial erstreckenden Stege einen abgerundeten Endabschnitt aufweisen.

Besonders vorteilhaft für eine Drehmomentübertragung, insbesondere wenn das Schraubteil als hohlzylindrische Schraube ausgebildet ist, hat die Einlegehülse gemäß einer weiteren Variante im Montageabschnitt zumindest sechs, vorzugsweise zwölf, über den Umfang der Einlegehülse verteilte Zähne ausgebildet. Hierbei erstrecken sich die Zähne bevorzugt mit einem Endabschnitt nach außen in den Kraftangriff. Insbesondere bildet die Einlegehülse mit den Zähnen einen gezahnten Kragen, so dass die Einlegehülse mittels der Zähne auch gegen eine Rotation formschlüssig von der polymeren Masse umgeben ist und das Schraubteil über seine axiale Erstreckung insbesondere vor Defekten durch eine Drehmomentbeaufschlagung am Kraftangriff schützt.

Zur weiteren Optimierung des übertragbaren Drehmoments und Bereitstellung eines Ausreißschutzes bei großer Krafteinwirkung können sich die Endabschnitte der Zähne zum Kraftangriff weisend derart verbreitern, dass in einer Aufsicht axial zum Innenkanal die Endabschnitte der Zähne trapezförmig ausgebildet sind. Die trapezartige Ausführung der Endabschnitte ist insbesondere derart, dass die Endabschnitte der Zähne zum Innenkanal weisend einen Hinterschnitt aufweisen. Bei der Herstellung des Schraubteils füllt die polymere Masse die Hinterschnitte und wirkt bei dem hergestellten Schraubteil einem Abziehen des Kraftangriffs von der Einlegehülse entgegen.

Zweckmäßig sind die Zähne der Einlegehülse an eine Außenkontur des Kraftangriffs angepasst. Vorteilhaft weist der Kraftangriff eine regelmäßig konvex polygonale Außenkontur auf, z. B. ein Sechskant für einen entsprechenden Werkzeugschlüssel. **In** einer Ausführung ist zumindest ein Zahn der Einlegehülse einem Eckpunkt der polygonalen Außenkontur zugeordnet und erstreckt sich vorzugsweise radial zu diesem zugeordneten Eckpunkt. Als besonders vorteilhaft hat sich gezeigt, dass die Endabschnitte der Zähne der Einlegehülse, welche einem Eckpunkt zugeordnet sind, gemäß einer Ausführungsform in Richtung des Eckpunkts in einem Winkel zusammenlaufend ausgebildet sind. Dieser Winkel, in welchem die Endabschnitte zusammenlaufen, entspricht vorzugsweise einem Innenwinkel, welchen die zwei in diesem Eckpunkt zusammenlaufenden Seiten der polygonalen Außenkontur einschließen.

**In** einer Variante bei dem Kraftangriff mit einer regelmäßig konvex polygonalen Außenkontur ist gemäß einer Ausführung der Erfindung zumindest ein Zahn, einer Seite der polygonalen Außenkontur zugeordnet. Der jeweilige Zahn erstreckt sich zweckmäßig in Richtung eines Punktes auf der jeweiligen Seite, wobei dieser Punkt auf einer halben Strecke der Seite angeordnet ist. Vorteilhaft ist zudem, wenn der Endabschnitt des Zahns insbesondere eine parallel zur jeweiligen Seite verlaufende Stirnfläche aufweist. Eine abweichende ebenfalls vorteilhafte Ausführung mit einer unbestimmten Ausrichtung und Positionierung der Einlegehülse in Bezug auf die Außenkontur hat den Vorteil, dass die Einlegehülse nicht in Bezug auf die Außenkontur des Schraubteils positioniert werden muss.

Die Einlegehülse ist vorzugsweise aus einem metallischen Werkstoff ausgebildet. Als besonders vorteilhaft hat sich dabei Aluminium erwiesen, da Aluminium eine Schwindung ähnlich einer polymeren Masse mit einem Faseranteil, insbesondere einem Glasfaseranteil, von circa größer/gleich 40 %-Massenanteil auf. Ebenfalls vorteilhaft ist die Einlegehülse in einer Variante aus einem VA-Stahl, z. B. einem 1.4301 Edelstahl nach **DIN EN** 10088-2: 2014-12, ausgebildet.

Optional kann die Einlegehülse auch aus einem Organo-Blech ausgebildet sein. Dieses ist insbesondere ein Laminat aus Fasern, vorzugsweise Kohle- oder Glasfasern, mit Kunststoff, zweckmäßig ein Polyamid.

Zweckmäßig für die Erfindung weist die Fasern enthaltende plastifizierte polymere Masse des Grundkörpers einen Volumenanteil an Fasern im Bereich von 2,5 % bis 75 %, insbesondere 14 % bis 40 %, und/oder einen Massenanteil an Fasern von 30 % bis 75 %, bevorzugt 50 % bis 65 %, auf.

Ebenfalls vorteilhaft zum Erreichen der geforderten Eigenschaften weisen die Fasern eine Länge im Bereich von 0,1 mm bis 10 mm auf. Vorzugsweise sind die Fasern als Kurzfasern mit einer Länge im Bereich von 0,2 mm bis 0,5 mm und/oder als Langfasern mit einer Länge im Bereich von 1 mm bis 10 mm ausgebildet. Zweckmäßig ist zudem, wenn die Fasern einen mittleren Durchmesser im Bereich von etwa 3 µm bis 35 µm, bevorzugt einen mittleren Durchmesser im Bereich von 5 µm bis 20 µm, aufweisen. Insbesondere bei Schraubteilen mit einer Einlegehülse, welche die Öffnungen aufweist, ist die Faserlängen vorzugsweise kleiner oder ungefähr gleich, insbesondere maximal gleich der Größe der Öffnungen, insbesondere dem Lochkreisdurchmesser.

Ein erfindungsgemäßes Verfahren zur Herstellung des Schraubteils nach zumindest einer der vorgenannten Ausführungen des Schraubteils sieht vor, dass das Schraubteil mit einem Spritzgussverfahren hergestellt wird, welches lediglich einen Anspritzpunkt zum Einspritzen der polymeren Masse vorsieht. Die Reduzierung der notwendigen Anspritzpunkte reduziert den Herstellungsaufwand. Weiterhin ist die polymere Masse innerhalb des Grundkörpers homogen verteilt. Es bilden sich insbesondere bei der Herstellung keine Fugen im polymeren Material des Grundkörpers. Derartige Fugen können beim Stand der Technik durch ein Zusammentreffen von zwei an unterschiedlichen Punkten eingespritzten, polymeren Massen entstehen, wobei die Fugen regelmäßig eine Schwachstelle des hergestellten Schraubteils darstellen.

Vorteilhaft für die Herstellung ist zudem, wenn der Anspritzpunkt zum Innenkanal des herzustellenden Schraubteils derart abgewinkelt angeordnet wird, dass die polymere Masse in einem Winkel zum Innenkanal weisend in ein geschlossenes Formwerkzeug eingespritzt wird. Zweckmäßig hat das abgewinkelte Einspritzen den Vorteil, dass im Bereich des Innenkanals, welcher durch den senkrecht in Einsteckrichtung einführbaren Kernteil gebildet wird, mehr freier Raum für das Kernteil zur Verfügung steht. Diese Ausführung ermöglicht dadurch insbesondere, dass der entsprechende Kernteil des Formwerkzeugs mittels einer Kernkühlung aktiv gekühlt wird. Die Kernkühlung erhöht vorteilhaft die Fertigungsgeschwindigkeit und verlängert die Standzeit des Formwerkzeugs, insbesondere des Kernteils.

Insbesondere wird bei dem Verfahren zum Herstellen des Schraubteils ein Heißkanalsystem zum Spritzgießen verwendet. Besonders bevorzugt wird das Heißkanalsystem in Kombination mit einem Kernteil mit einer Kernkühlung verwendet, so dass die Fertigung weiter verbessert wird.

Weitere vorteilhafte Ausgestaltungen der Erfindung ergeben sich aus der folgenden Figurenbeschreibung und den abhängigen Unteransprüchen.

Es zeigen:
- Fig. 1: einen Längsschnitt durch ein Schraubteil axial zu einem Innenkanal des Schraubteils,
- Fig. 2: eine Rückansicht auf das Schraubteil gemäß Figur 1 gegen die Einsteckrichtung gemäß Figur 1,
- Fig. 3: eine Aufsicht auf das Schraubteil gemäß Figur 1 in eine Einsteckrichtung gemäß Figur 1,
- Fig. 4: einen Längsschnitt durch eine Baugruppe axial zu dem Innenkanal des Schraubteils, aufweisend ein Leitungssystemelement und das Schraubteil gemäß Figur 1,
- Fig. 5: eine perspektivische Ansicht einer ersten Ausführung einer Einlegehülse aus einem Blechteil,
- Fig. 6: eine Aufsicht auf eine flache Seite eines unverformten Blechteils der ersten Ausführung der Einlegehülse gemäß Figur 5,
- Fig. 7: eine Aufsicht auf eine flache Seite eines unverformten Blechteils einer zweiten Ausführung einer Einlegehülse,
- Fig. 8: eine Aufsicht auf eine flache Seite eines unverformten Blechteils einer dritten Ausführung der Einlegehülse, und
- Fig. 9: eine Aufsicht auf ein Schraubteil in Einsteckrichtung mit einem teilweise transparenten Grundkörper und mit der aus einem Blechteil gemäß Figur 8 geformten Einlegehülse.
- Fig. 10: einen Längsschnitt durch eine weitere Ausführung des Schraubteils axial zu dem Innenkanal des Schraubteils,
- Fig. 11: eine perspektivische Ansicht einer konusartigen Ausführung der Einlegehülse,
- Fig. 12: eine Aufsicht in eine Einsteckrichtung E auf die Einlegehülse gemäß Figur 11,
- Fig. 13: einen Längsschnitt durch ein Teil eines Formwerkzeugs und einer in das Formwerkzeug eingelegten Einlegehülse gemäß Figur 11,
- Fig. 14: einen Ausschnitt einer Aufsicht auf eine flache Seite eines unverformten Blechteils einer weiteren Ausführung der Einlegehülse gemäß Figur 11, und
- Fig. 15: einen Ausschnitt einer Aufsicht entgegen der Einsteckrichtung E auf die Einlegehülse gemäß Figur 11,

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

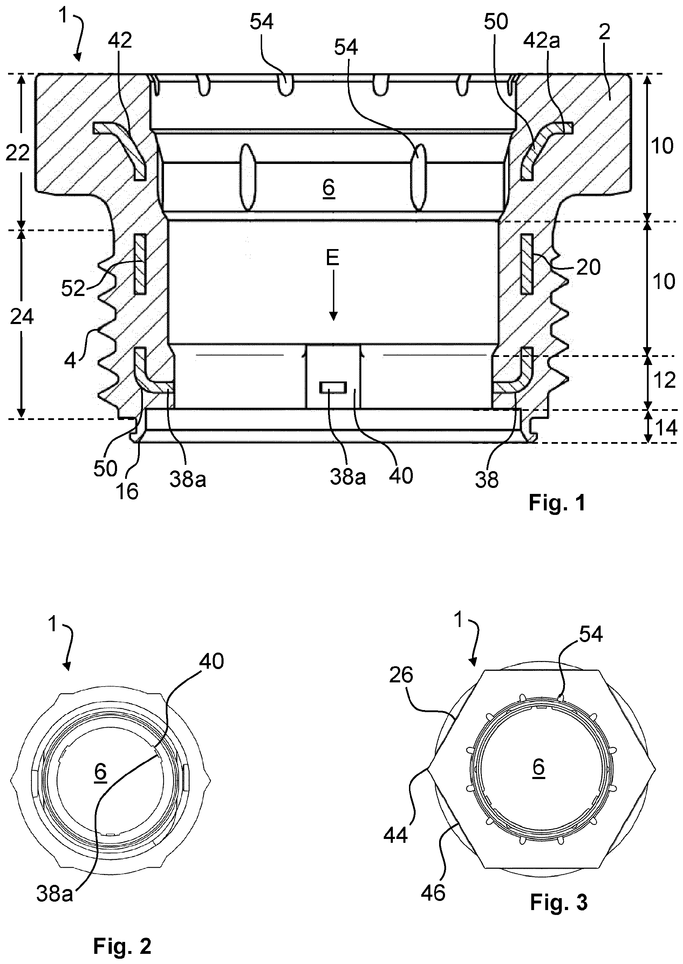

In Figur 1 ist ein Schraubteil 1 mit einem ringförmigen Querschnitt dargestellt. Das Schraubteil 1 ist insbesondere eine Hohlschraube oder eine Mutter. Das Schraubteil 1 weist einen hohlzylindrischen und zumindest teilweise aus einer Fasern enthaltenden plastifizierten polymeren Masse 2 spritzgegossenen Grundkörper auf.

Vorzugsweise handelt es sich bei der polymeren Masse 2 um ein Harz bzw. ein Duroplast. Insbesondere enthält die polymere Masse 2 ein Epoxidharz (EP) oder ein ungesättigtes Polyesterharz (UP) oder ein Vinylesterharz (VE) oder ein Phenol-Formaldehydharz (PF) oder ein Diallylphthalatharz (DAP) oder ein Methacrylatharz (MMA) oder ein Polyurethan (PUR) oder ein Aminoharz oder ein Melaminharz (MF/MP) oder ein Harnstoffharz (UF).

**In** bevorzugter Ausbildung bildet die plastifizierte polymere Masse 2 eine thermoplastische Matrix. Vorzugsweise besteht die polymere Masse 2 dabei aus einem Polyamid (PA), beispielsweise einem Polyphtalamid (PPA) oder einem Polypropylen (PP) oder einem Polyetheretherketon (PEEK) oder einem Polyphenylensulfid (PPS) oder einem Polysulfon (PSU), bevorzugt einem Polyphenylsulfon (PPSU) oder einem Polyethersulfon (PES) oder einem Polyetherimid (PEI) oder einem Polyethylenterephtalat (PET) oder einem Polybutylenterephtalat (PBT).

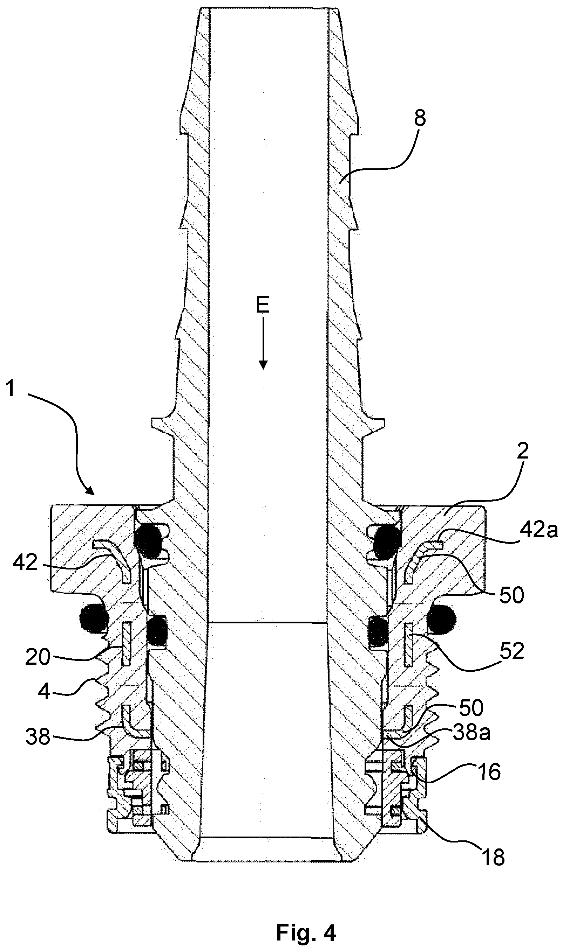

Entsprechend der Ausführung in den Figuren 1 und 4 weist der Grundkörper mindestens ein Innengewinde und/oder ein Außengewinde 4 auf. **In** den dargestellten Ausführungen des Schraubteils 1 weist der Grundkörper lediglich ein Außengewinde 4 auf.

Weiterhin weist der Grundkörper einen Innenkanal 6 zur Anordnung und/oder Durchführung eines Leitungssystemelements 8 auf. Exemplarisch zeigt Figur 4 eine entsprechende Baugruppe, wobei ein als Steckverbinder ausgebildetes Leitungssystemelement 8 mit einem Steckerteil in dem Innenkanal 6 angeordnet ist. Das Leitungssystemelement 8 wird dabei in eine Einsteckrichtung E in dem Innenkanal angeordnet und/oder durchgeführt.

Der Innenkanal 6 hat zudem zumindest einen Dichtabschnitt 10 zur Anordnung einer Umfangsdichtung zur Abdichtung zwischen Innenkanal 6 und dem Leitungssystemelement 8 und/oder zumindest einen Stützabschnitt 12 zur Stützung und/oder Führung des Leitungssystemelements 8 und/oder zumindest einen Halteabschnitt 14 zur direkten oder indirekten Arretierung des Leitungssystemelements 8 ausgebildet. Beispielhaft sind einzelne Abschnitte in Figur 1 gekennzeichnet. Die genauen Funktionen der einzelnen Abschnitte sowie deren Anordnung und Ausbildung sind insbesondere aus der WO 2013/092234 A1 bekannt.

Gemäß den Ausführungsbeispielen in den Figuren 1 und 4 ist vorteilhaft der Halteabschnitt 14 an einem in die Einsteckrichtung E weisenden Ende des Innenkanals 6 ausgebildet. Die Einsteckrichtung E ist insbesondere die Richtung, in welche ein Leitungssystemelement 8 in das Schraubteil 1 eingebracht, im Ausführungsbeispiel gemäß Figur 4 eingesteckt, wird. Der Grundkörper weist insbesondere auf einer Außenwandung im Bereich des Halteabschnitts 14 eine Außenringwulst 16 auf. An dieser Außenringwulst 16 ist zur indirekten Halterung und/oder Arretierung des Leitungssystemelements 8 ein in diesem Beispiel exemplarisch ringförmiger Verriegelungskäfig 18 befestigbar, insbesondere aufrastbar. Vorteilhaft wirkt der Verriegelungskäfig 18 mit dem Leitungssystemelement 8 derart zusammen, dass das Leitungssystemelement 8 relativ zu dem Schraubteil 1 insbesondere im Innenkanal 6 arretierbar ist.

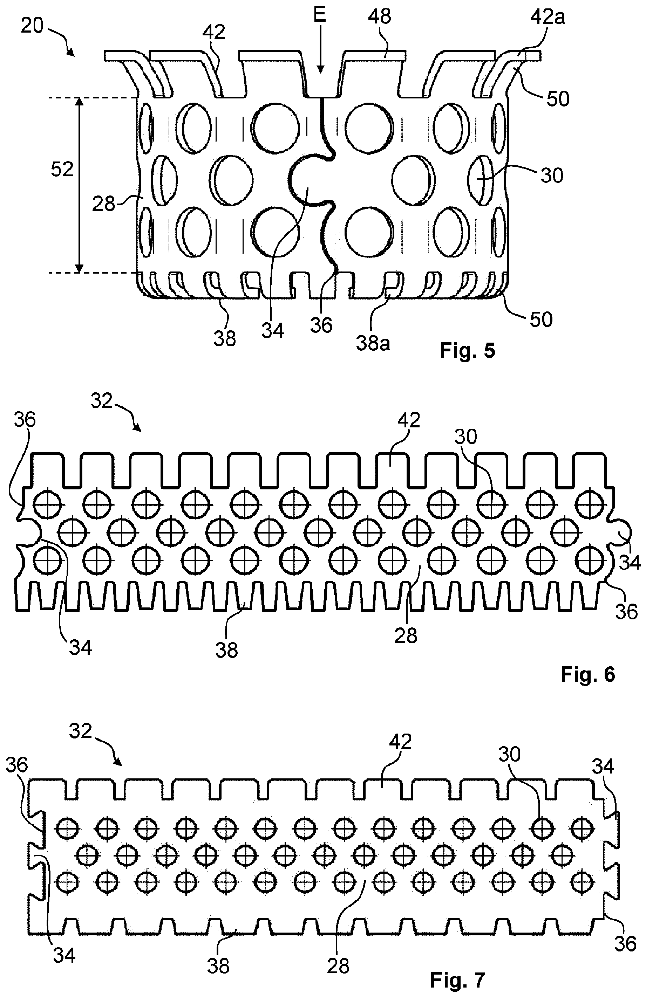

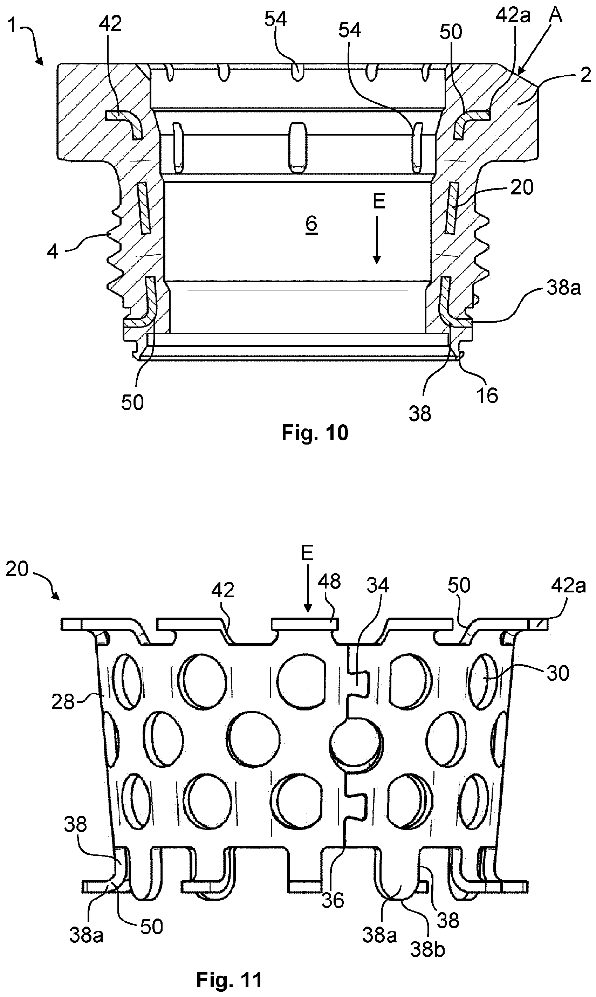

Erfindungsgemäß ist in dem Grundkörper koaxial zum Innenkanal 6, wie in den Figuren 1, 4, 9 und 10 dargestellt, eine Einlegehülse 20 angeordnet. Die Einlegehülse 20 ist losgelöst in den Figuren 5 und 11 dargestellt. Erfindungsgemäß ist dabei die Einlegehülse 20 zumindest teilweise von der polymeren Masse 2 umspritzt, so dass die Einlegehülse 20 zumindest teilweise radial zum Innenkanal 6 weisend und radial vom Innenkanal 6 abweisend von der polymeren Masse 2 umgeben ist.

Besonders vorteilhaft, um ein möglichst hohes Drehmoment übertragen zu können, verhindert die Einlegehülse 20, insbesondere in einer Anordnung im Grundkörper gemäß den Figuren 1, 4, 9 oder 10, dass es bei der Herstellung, d. h. beim Spritzgießen, zu einer symmetrischen Faserausrichtung der Fasern in der plastifizierten polymeren Masse 2 kommt. **In** der Folge sind die Fasern im Grundkörper durchmischt und weisen eine asymmetrische Faserorientierung im Grundkörper bzw. der polymeren Masse 2 auf.

Das erfindungsgemäße Schraubteil 1 ist mittels der Einlegehülse 20 dadurch besonders vorteilhaft in der Herstellung, dass eine homogene asymmetrische Faserorientierung, auch bei einem Spritzguss mit lediglich einem Anspritzpunkt, ermöglicht ist. Das spart insbesondere aufwändige Formwerkzeuge mit komplexen Angusssystemen und Werkstoffausschuss, welcher durch eine in dem Angusssystem aushärtende polymere Masse 2 entsteht.

Die asymmetrische Faserorientierung im Grundkörper weist am Schraubteil 1 insbesondere die Vorteile auf, dass das Schraubteil 1 gegen einen oder mehrere in eine bestimmte Richtung wirkende Lastfälle auf Grund der Faserausrichtung besonders anfällig ist, so dass werkstoffbedingte unterschiedliche Widerstandszonen innerhalb des Schraubteils 1 vermieden werden.

Weiterhin von Vorteil ist die Einlegehülse 20 in dem Sinne, dass das Schraubteil 1 einen reduzierten Vorspannkraftverlust aufweist, da in einem kritischen Querschnitt des Schraubteils 1 eine durch ein Verschrauben erzeugte axiale Vorspannkraft zusätzlich über die Einlegehülse 20 aufgenommen und gehalten wird.

Entsprechend den Ausführungsbeispielen in den Figuren 1, 4 und 10 weist der Grundkörper in einer vorteilhaften Ausführung einen sich axial erstreckenden Montageabschnitt 22 und einen sich axial erstreckenden Gewindeabschnitt 24 auf. Der Grundkörper weist in dem Gewindeabschnitt 24 vorteilhaft ein Gewinde auf, wobei in den dargestellten Ausführungen im Gewindeabschnitt 24 ein Außengewinde 4 auf einer Außenwand des Grundkörpers ausgebildet ist. Alternativ weist der Grundkörper gemäß einer nicht dargestellten Ausführung ein Innengewinde auf, welches im Innenkanal 6 und/oder als eine koaxiale Verlängerung des Innenkanals 6 ausgebildet ist. Die jeweiligen Abschnitte sind für eine bessere Übersichtlichkeit lediglich in Figur 1 gekennzeichnet.

Insbesondere dient der Montageabschnitt 22 dazu, ein fremderzeugtes Drehmoment auf das Schraubteil 1 zu übertragen. Vorzugsweise weist daher der Grundkörper im Montageabschnitt 22 einen Kraftangriff auf, welcher beispielsweise für ein Werkzeug geeignet oder auf Grund einer besonders griffigen Außenkontur 26 zum manuellen Greifen, Festhalten und Drehen durch einen Anwender geeignet ist.

Besonders vorteilhaft hat sich bei der Ausführung des Schraubteils 1 mit einem Montageabschnitt 22 und einem Gewindeabschnitt 24 erwiesen, wenn die Einlegehülse 20 im Grundkörper zumindest teilweise in dem Montageabschnitt 22 und zumindest teilweise in dem Gewindeabschnitt 24 angeordnet ist. Diese vorteilhafte Ausführung ist beispielsweise in den Figuren 1 und 4 dargestellt.

Insbesondere in den Figuren 1 und 10 ist zudem eine zweckmäßige Ausführung dargestellt, gemäß welcher die Einlegehülse 20 derart ausgebildet und im Grundkörper angeordnet ist, dass sich die Einlegehülse teilweise über die funktionalen Abschnitte des Innenkanals 6 erstreckt. **In** Figur 1 ist beispielhaft dargestellt, dass sich die Einlegehülse 20 über einen ersten und zweiten sowie einen Stützabschnitt 12 erstreckt. Gemäß einer, nicht dargestellten, vorteilhaften Ausführung erstreckt sich die Einlegehülse 20 über alle funktionalen Abschnitte des Innenkanals 6, insbesondere über zumindest einen Halteabschnitt 14, über zumindest einen Dichtabschnitt 10 und zumindest einen Stützabschnitt 12.

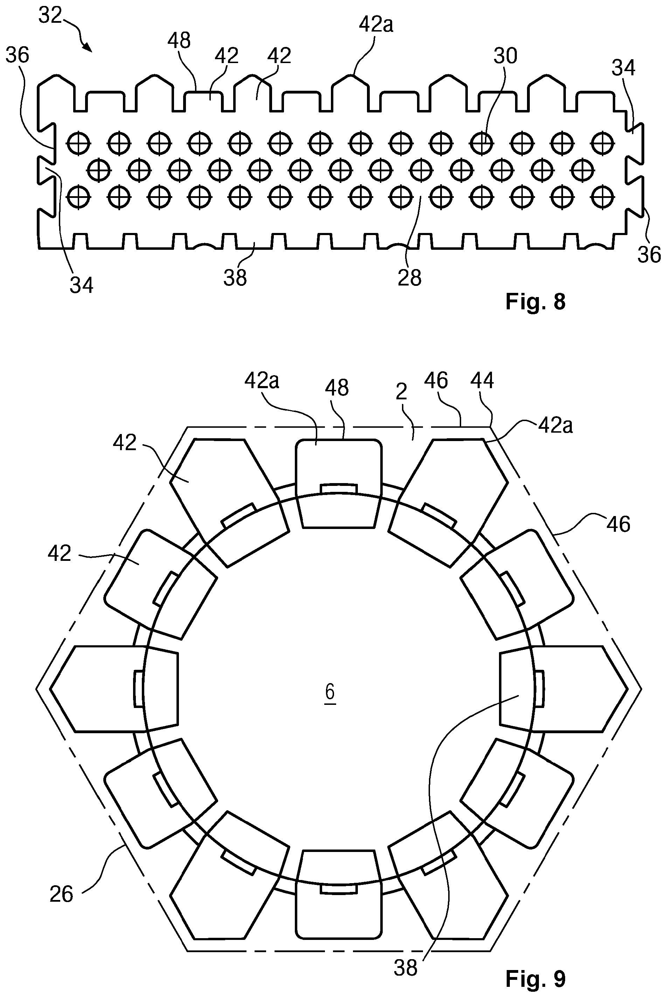

Zweckmäßig weist die Einlegehülse 20 in einer Aufsicht axial zum Innenkanal 6, wie exemplarisch in den Figuren 9, 11 und 12 dargestellt, ein umfänglich geschlossenes Ringprofil auf. Das geschlossene Ringprofil ist besonders geeignet, um radial auf die Einlegehülse 20 bzw. auf das Schraubteil 1 wirkenden Kräften zu widerstehen. Insbesondere treten derartige Kräfte bei dem Schraubteil 1 beim Verschrauben am Gewinde bzw. im Gewindeabschnitt 24 auf.

Entsprechend den Figuren 5 bis 8, 11 und 13 weist die Einlegehülse 20 in einer weiteren Ausführung umfangsgemäß in einer Umfangswandung 28 verteilte Öffnungen 30 auf. Entsprechend den dargestellten Ausführungen weisen die Öffnungen 30 gemäß einer vorteilhaften Ausbildung der Einlegehülse 20 einen Öffnungsanteil von mindestens 30 % der Umfangswandung 28 auf. Zweckmäßig werden die Öffnungen 30 beim Spritzgießen von der plastifizierten polymeren Masse 2 gefüllt, so dass die Einlegehülse 20 dadurch formschlüssig in der polymeren Masse 2 im Grundkörper angeordnet ist. Ein weiterer Vorteil der Öffnungen 30 besteht darin, dass eine Durchmischung der Fasern bzw. der Faserorientierung während des Spritzgießens begünstigt wird.

Vorzugsweise sind die Öffnungen 30, wie in den Figuren 5 bis 8, 11 und 13 dargestellt, umfangsgemäß in einer Öffnungsreihe in der Einlegehülse 20 angeordnet, wobei über die axiale Erstreckung der Einlegehülse 20 insbesondere mehrere Öffnungsreihen angeordnet sind. Zweckmäßig weist die Einlegehülse 20, wie in den Figuren 5 bis 8, 11 und 13 dargestellt, drei Öffnungsreihen auf. Vorzugsweise sind die Öffnungen 30 derartig versetzt zueinander angeordnet, dass die Öffnungen 30 einer Öffnungsreihe umfangsgemäß versetzt zu den Öffnungen 30 zumindest einer axial benachbarten Öffnungsreihe angeordnet sind.

Durch die Verwendung der erfindungsgemäßen Einlegehülse 20, insbesondere die genannten Öffnungen 30 aufweisend, wird für das Spritzgießen des Schraubteils 1 lediglich ein Anspritzpunkt benötigt. Vorzugsweise ist der Anspritzpunkt im Gewindeabschnitt 24 angeordnet, wobei die plastifizierte polymere Masse 2 radial oder axial zum Innenkanal 6 in eine Kavität des Formwerkzeugs eingespritzt werden kann. Ebenfalls kann der Anspritzpunkt im Montageabschnitt 22 angeordnet sein. Dabei wird die plastifizierte polymere Masse 2 axial zum Innenkanal 6, d. h. insbesondere senkrecht zum Kraftangriff, in Einsteckrichtung E angespritzt. Eine vorteilhafte weitere Ausführung sieht es vor, dass der Anspritzpunkt, wie in der Figur 10 dargestellt, in einem Winkel zum Innenkanal weisend angeordnet ist. In der Figur 10 ist der Anspritzpunkt bzw. die Spritzrichtung der polymeren Masse 2 mit A gekennzeichnet. Vorteilhaft kann dadurch mit einem Nadelverschluss, das bedeutet verlustfrei in Bezug auf einen Angusskanal, gearbeitet werden.

Eine zweckmäßige Ausgestaltung der Öffnungen 30 sieht vor, dass eine Wandstärke der Einlegehülse 20 bzw. der Umfangswandung 28 und/oder eine Größe der Öffnungen 30 größer oder gleich groß ist als/wie eine Faserlänge der in der polymeren Masse 2 enthaltenden Fasern.

Insbesondere sind die Öffnungen 30, wie in den Figuren 5 bis 8 dargestellt, als kreisförmige Löcher ausgebildet. Vorzugsweise weisen die Löcher jeweils einen Lochkreisdurchmesser im Bereich von 1 mm bis 3 mm, vorzugsweise im Bereich von 1,5 mm bis 2,5 mm, auf.

Alternativ zu der Kreisform sind die Öffnungen 30 gemäß einem nicht dargestellten Ausführungsbeispiel eckig, oval oder als Langloch ausgebildet.

Gemäß einer Variante des Schraubteils 1 ist die Einlegehülse 20 als ein Blechteil 32, beispielhaft in den Figuren 6 bis 8, 11 und 12 dargestellt, ausgebildet, welches insbesondere eine hohlzylindrische Form, beispielhaft in Figur 5 dargestellt, aufweist. Zweckmäßig sind die Öffnungen 30 der Einlegehülse 20 mittels eines Schneid- oder Stanzverfahrens in die Umfangswandung 28 des Blechteils 32 eingebracht. Zweckmäßig ist die insbesondere als Blechteil 32 ausgebildete Einlegehülse 20 sich konusartig in die Einsteckrichtung E weisend im Durchmesser verjüngend ausgebildet. Diese Ausführung ist exemplarisch in den Figuren 10 bis 13 dargestellt.

Besonders vorteilhaft ist die Einlegehülse 20 ein Stanz-Biegeteil, wobei das Blechteil 32 in einem Stanzschritt zusammen mit den Öffnungen 30 aus einem Blech ausgestanzt wird. Zweckmäßig weist die Fertigung der Einlegehülse 20 dadurch zumindest einen Stanzschritt zum Herstellen des Blechteils 32 und einen Formschritt zum Formen der hülsenartigen Geometrie auf.

Entsprechend einer vorteilhaften, nicht dargestellten Ausführung ist die Einlegehülse 20 als ein skelettartiges Tragwerk mit Stützen und Trägern ausgebildet, wobei die Öffnungen 30 als Polygone von den Stützen und Trägern umschlossen ausgebildet sind. Insbesondere stellt eine Gitter- bzw. eine Netzstruktur ein skelettartiges Tragwerk mit Stützen und Trägern im Sinne der Erfindung dar, wobei zweckmäßig auch das skelettartige Tragwerk in einem ersten Schritt eben geschaffen und in einem weiteren Schritt in eine hülsenartige Form um eine zentrale Hülsenachse 20 zur Einlegehülse 20 gebogen wird. Insbesondere ist die Einlegehülse 20 mit der zentralen Hülsenachse bei dem gefertigten Schraubteil 1 koaxial zum Innenkanal 6 angeordnet.

Vorteilhaft ist die Einlegehülse 20, wie vorgenannt, aus einem zu einer Hülse gebogenen Biegeteil gebildet. Damit die hülsenartige Form der Einlegehülse 20 auch bei einer radial nach außen oder radial nach innen wirkenden Last erhalten bleibt, besteht eine erste, insbesondere in den Figuren 5 bis 8 und 11 dargestellte, Ausführung darin, dass zwei zusammengebogene Außenkanten 36 des Biegeteils jeweils mit einer Kontur 34 zum gegenseitigen Verbinden formschlüssig ineinandergreifen. Insbesondere zeigen die Figuren 5 und 6 eine erste vorteilhafte Kontur 34 und die Figuren 7 und 8 eine zweite vorteilhafte Kontur 34, wobei die Art der Kontur 34 vom jeweiligen Anwendungsfall abhängig ist. Zusätzlich können diese Konturen 34 bei formschlüssiger Verbindung zum spielfreien Verbinden verkeilt oder verstemmt sein. Hierbei kann beispielsweise durch Materialverdrängung eine verbesserte Klemmwirkung zwischen den Konturen 34 erreicht werden.

Eine weitere vorteilhafte Ausführung zum Beibehalten der hülsenartigen Form der Einlegehülse 20 sieht vor, dass die zwei zusammengebogenen Außenkanten 36 des Biegeteils stoffschlüssig, beispielsweise durch Schweißen, miteinander verbunden sind. Insbesondere können die zwei Außenkanten 36 auch eine vorgenannte Kontur 34 aufweisen, so dass die Außenkanten 36 zum stoffschlüssigen Verbinden durch die formschlüssige Verbindung in einer vorteilhaften Position gehalten werden.

Gemäß einer vorteilhaften, nicht dargestellten Ausführung ist die Einlegehülse 20 als ein gelochtes Tiefziehteil ausgebildet. Vorteilhaft entstehen dadurch keine Außenkanten 36, welche zusammengebogen und miteinander verbunden werden müssen.

Entsprechend den Figuren 1,4 und 8 hat die Einlegehülse 20 in einer Variante zumindest an einem axialen Ende zumindest zwei, vorzugsweise drei oder mehr, über den Umfang der Einlegehülse 20 verteilte Stege 38 ausgebildet. Die Stege 38 sind vorteilhaft zum Innenkanal 6 weisend ausgebildet. Vorzugsweise ist die Gesamtanzahl der Stege 36 derart groß, dass sich ein nahezu geschlossener Kreis bildet.

Insbesondere in Figur 6 ist ein vorteilhaftes Blechteil 32 einer Einlegehülse 20 mit vierundzwanzig Stegen 38 dargestellt. Zweckmäßig ist in den Figuren 7 und 8 jeweils ein vorteilhaftes Blechteil 32 einer Einleghülse mit zwölf Stegen 38 dargestellt. Vorteilhaft verbessern die Stege 38 die Anordnung der Einlegehülse 20 im Grundkörper.

Insbesondere ragen zumindest zwei, vorzugsweise drei, wie in Figur 2 dargestellt, Stege 38 jeweils mit einem zum Innenkanal 6 weisenden Endabschnitt 38a aus der polymeren Masse 2 heraus. Zweckmäßig ragen dabei die Endabschnitte 38a der Stege 38 in dem Stützabschnitt 12 oder einem funktionslosen Abschnitt des Innenkanals 6 aus der polymeren Masse 2 heraus. Zweckmäßig ist dieser Stützabschnitt 12 oder der funktionslose Abschnitt des Innenkanals 6 axial benachbart zu dem Dichtabschnitt 10 und/oder dem Halteabschnitt 14 angeordnet und dient insbesondere nicht der Anlage einer Umfangsdichtung oder der Arretierung des Leitungssystemelements 8. Die herausragenden Endabschnitte 38a können dabei besonders vorteilhaft bei der Herstellung für die Anordnung, insbesondere die axiale und radiale Positionierung und Klemmung der Einlegehülse 20 innerhalb der Kavität des Formwerkzeugs verwendet werden.

Die herausragenden Stege 38 bzw. deren Endabschnitte 38a ragen insbesondere in den Innenkanal 6, welcher zweckmäßig ein Fluid führt. Gemäß einem bevorzugten Anwendungsfall, einer Druckluft-Bremsanlage, wird der Innenkanal 6 mit getrockneter Luft beaufschlagt. Somit treten vorteilhaft bei dieser Anwendung keine Kondensate in die Austrittsstellen der Stege 38 aus der polymeren Masse 2 ein.

Zur Herstellung des Schraubteils 1 wird die Fasern enthaltende plastifizierte polymere Masse 2 durch mindestens eine Einspritzöffnung eines nicht dargestellten Formwerkzeugs in die Kavität des Formwerkzeugs eingespritzt und nach einem Erstarren als Schraubteil 1 aus dem Formwerkzeug entformt.

Vorzugsweise wird der Innenkanal 6 durch Einlegen geeigneter Kernteile in das Formwerkzeug erzeugt. Entsprechend dem in Figur 1 dargestellten Schraubteil 1 weist eine Variante der Herstellung ein Formwerkzeug mit einem mehrteiligen Kern aus mindestens zwei Kernteilen auf, welche bei einer Bildung der Kavität axial zum Innenkanal 6 benachbart zueinander angeordnet sind. Der mehrteilige Kern ermöglicht insbesondere einen Wechsel des Durchmessers des Innenkanals 6 in den einzelnen Abschnitten, wobei der Innenkanal 6 seinen kleinsten Durchmesser an einer Kontaktstelle der Kernteile aufweist und der Durchmesser des Innenkanals 6 von der Kontaktstelle in oder gegen die Einsteckrichtung E weisend gleichbleibt oder zunimmt. Insbesondere werden zumindest zwei Kernteile verwendet, wobei sich die Einlegehülse 20 während des Spritzgießens auf einem Kernteil 41 mit den Stegen 38 abstützt oder zwischen zwei Kernteilen verspannt ist. Zweckmäßig ist die Einlegehülse 20 gemäß dem Ausführungsbeispiel in Figur 1 zwischen zwei Kernteilen mit drei Endabschnitten 38a der Stege 38 verspannt.

Gemäß einer Ausführung des Schraubteils 1 ist in einer Umfangsfläche des Innenkanals 6 zumindest eine axial verlaufende Nut 40 ausgebildet, in der einer der Stege 38 aus einem Nutgrund herausragt. Vorzugsweise weist der jeweilige Steg 38 maximal eine radiale Höhe auf, die einer Tiefe der Nut 40 entspricht. Insbesondere ragt der Steg 38 dadurch nicht in einen im Querschnitt kreisförmigen Abschnitt des Innenkanals 6, so dass ein Leitungssystemelement 8, welches in dem Innenkanal 6 angeordnet und/oder arretiert werden soll, nicht in einen Materialkontakt mit einem oder mehreren der Stege 38 kommt. Zweckmäßig kann die Nut 40 mit zumindest zwei Kernteilen erzeugt werden, wobei die Kernteile an ihrer Kontaktstelle korrespondierend zu den Stegen 38 ausgebildet sind, so dass die Stege 38 mit ihren Endabschnitten während des Spritzgießens in der Kavität des Formwerkzeugs verspannt gehalten werden. Insbesondere wird die Nut 40 von einem an zumindest einem Kernteil ausgebildeten Klemmteil dargestellt, welches beim Spritzgießen umspritzt wird. Dieses Klemmteil weist zweckmäßig eine Klemmbreite auf, welche einer Breite der Nut des gefertigten Schraubteils entspricht und größer oder gleich der Breite des Steges 38 plus dem Abstand zwischen zwei Stegen 38 ist. Vorteilhaft wird mit dieser Ausführung sichergestellt, dass innerhalb einer Nut 40 zumindest eine Klemmbreite als Summe aus einem oder zwei Stegabschnitten geklemmt wird.

Vorzugsweise sind die Klemmteile als zinnenartige Fortsätze ausgebildet, wobei die Stege 38 zwischen den zinnenartigen Fortsätzen der zwei Kernteile gespannt werden. Dies ergibt den Vorteil, dass die Kernteile ineinander verzahnt sind, so dass die Einlegehülse 20 vorpositioniert werden und während eines Schließens des Formwerkzeugs sicher gehalten werden kann. Vorzugsweise wird die Einlegehülse auf einem längeren Kernteil vorpositioniert, wobei das längere Kernteil dasjenige ist, das bei geöffnetem Formwerkzeug außerhalb von zumindest zwei Formbacken steht.

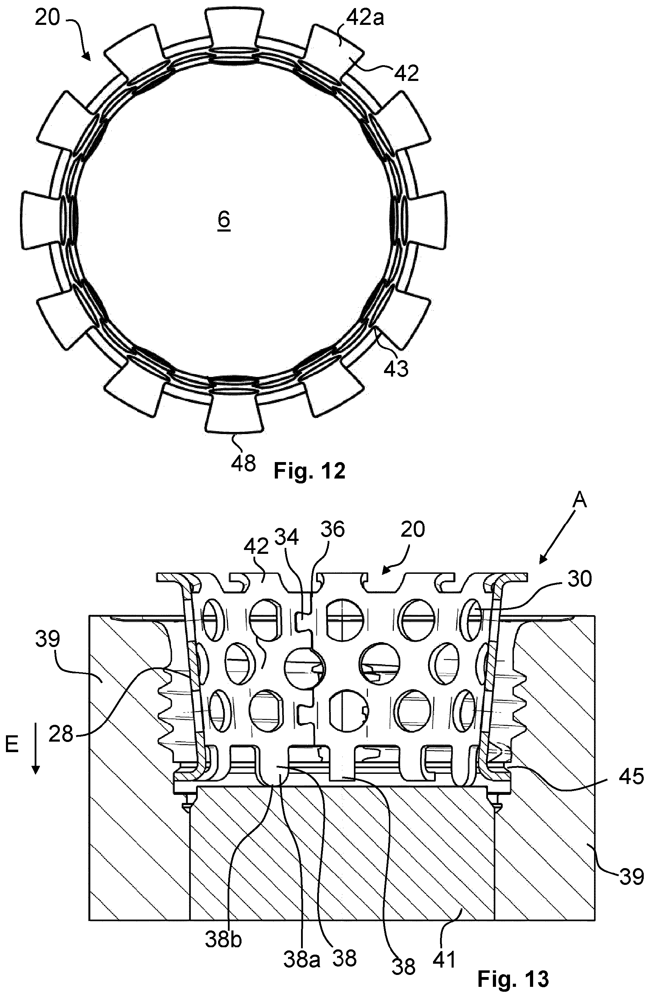

Gemäß einer weiteren Variante, welche ergänzend oder alternativ zu der vorgenannten Ausführung der Stege 38 ausführbar ist, ist zumindest ein Steg 38 radial vom Innenkanal 6 nach außen weisend ausgebildet. Diese Ausführung ist insbesondere in den Figuren 11 und 12 dargestellt. Zweckmäßig und ebenfalls in den Figuren 11 und 12 dargestellt ist vorzugsweise zumindest ein Steg 38 als alternative oder ergänzende Ausführung axial zum Innenkanal 6 weisend ausgebildet. In den Figuren 11 und 12 ist eine vorteilhafte Kombination dargestellt, gemäß welcher die Einlegehülse 20 sowohl sich radial nach außen weisende, als auch axial zum Innenkanal 6 weisende Stege 38 aufweist. Gemäß einer nicht dargestellten Ausführung weist die Einlegehülse 20 zweckmäßig radial zum Innenkanal 6 weisende, radial vom Innenkanal 6 nach außen weisende als auch sich axial zum Innenkanal 6 weisende Stege 38 auf.

In den Figuren 11 und 13 ist zudem eine bevorzugte Variante der sich axial zum Innenkanal 6 weisenden Stege 38 dargestellt, gemäß welcher die sich axial zum Innenkanal 6 weisenden Stege 38 abgerundete Endabschnitte 38b zur Auflage auf einem Kernteil 41 des Formwerkzeugs aufweisen. Insbesondere verbessern die abgerundeten Endabschnitte 38b die Füllung des Grundkörpers mit der polymeren Masse 2.

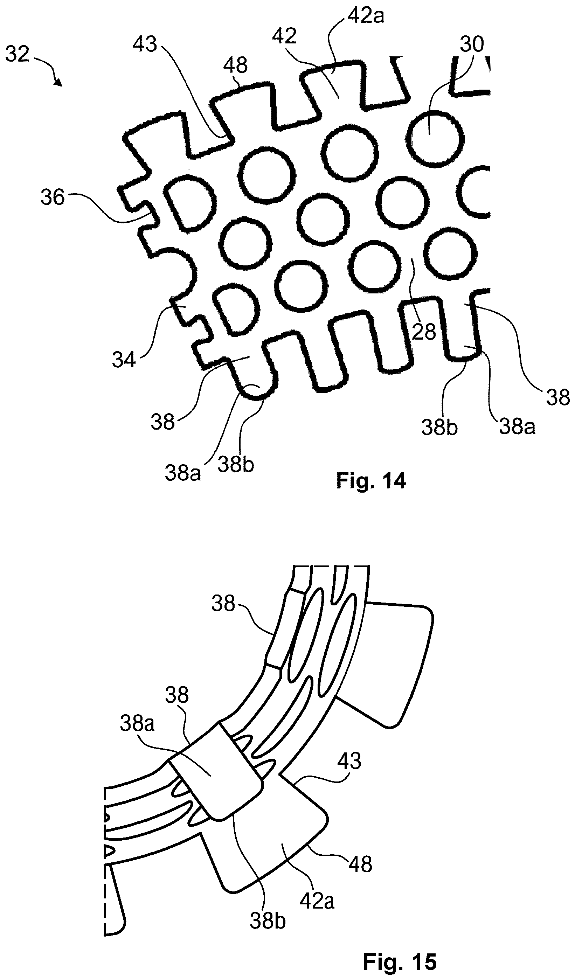

Gemäß einer in den Figuren 14 und 15 dargestellten, vorteilhaften Ausführung, sind auch die radial nach außen abgewinkelten Stege 38 mit abgerundeten Endabschnitten 38b ausgebildet. Die abgerundeten Endabschnitte 38b der axialen und/oder radial weisenden Stege 38 weisen vorzugsweise einen großen Radius, oder unterschiedliche Radien, auf, die bewirken, dass eine breite Auflagefläche oder Kontaktfläche zu den Schiebern 39 des Formwerkzeugs entsteht. Das hat den Vorteil, dass die Stege 38 gleichmäßiger gespannt werden können.

Entsprechend einer dieser Ausführungen stützt sich die Einlegehülse 20 mit den nach außen abgewinkelten Stegen 38, wie in Figur 13 dargestellt, an den Schiebern 39 des Formwerkzeugs ab. Weiterhin kann sich die Einlegehülse 20, wie in Figur 13 dargestellt, mit den sich axial in Einsteckrichtung erstreckenden Stegen 38 an dem Kernteil 41 ab. Insbesondere an den Kontaktstellen zwischen den Stegen 38 und dem Formwerkzeug treten die Stege 38 aus der polymeren Masse aus.

Gemäß der vorteilhaften Ausführung können sich die nach außen weisenden Stege 38 in den Schiebern 39 abstützen. Zweckmäßig können die nach außen weisenden Stege 38 mit Schieber 39, welche eine zumindest teilweise in Einsteckrichtung weisende Schrägfläche 45 aufweisen derart zusammenwirken, dass die Lage der Einlegehülse 20 im Formwerkzeug die beim Spritzgießen axial und radial gesichert ist.

Das Spritzgussverfahren des in den Figuren 10 bis 13 dargestellten Schraubteils 1 kann im Wesentlichen entsprechend dem vorgenannten, zu den Figuren 1 bis 9 beschriebenen Spritzgussverfahren erfolgen, wobei sich die Lage der Kontaktflächen zwischen der Einlegehülse 20 und dem Formwerkzeug entsprechend den Erstreckungsrichtungen der Stege 38 ändert.

Vorteilhaft hat die Einlegehülse 20 im Montageabschnitt 22 zumindest sechs, vorzugsweise zwölf, über den Umfang der Einlegehülse 20 verteilte Zähne 42 ausgebildet. Die Zähne 42 erstrecken sich dabei zweckmäßig zumindest mit einem Endabschnitt 42a nach außen in den Kraftangriff. Die Zähne 42 bewirken eine bevorzugte Drehmomentübertragung im Montageabschnitt 22 auf die Einlegehülse 20, wobei insbesondere über die Öffnungen 30 eine gute Kraftübertragung zum Gewindeabschnitt 24 gewährleistet ist.

Die Zähne 42 sind insbesondere derart angeordnet, dass sie nicht aus der polymeren Masse 2 herausragen oder mit diesem ein gemeinsame Fläche bilden. Vorzugsweise sind die Zähne 42 derart tief in der polymeren Masse 2 eingebettet, dass sie vollständig von einer polymeren Schicht bedeckt sind, die vorteilhaft insbesondere den Eintritt von Wasser verhindert. Insbesondere ist diese Ausführung bevorzugt, um Frostschäden vorzubeugen.

Gemäß einer bevorzugten Variante der Zähne 42 sind die Endabschnitte der Zähne 42 sich zum Kraftangriff weisend verbreiternd ausgebildet, so dass in einer Aufsicht axial zum Innenkanal 6, wie in Figur 12 dargestellt, die Endabschnitte der Zähne 42 trapezförmig ausgebildet sind. Vorteilhaft weisen die Endabschnitte der Zähne 42 aufgrund der trapezartigen Form zum Innenkanal 6 weisend einen Hinterschnitt 43 auf. Mittels des Hinterschnitts 43 wird des maximal übertragbare Drehmoment verbessert und ein Ausreißschutz bei großer Krafteinwirkung auf den Kraftangriff verbessert. Insbesondere indem bei der Herstellung des Schraubteils 1 die polymere Masse 2 die Hinterschnitte 43 umströmt wird vorteilhaft nach dem Erstarren bei dem hergestellten Schraubteil 1 ein Abziehen des Kraftangriffs von der Einlegehülse 20 erschwert.

Zweckmäßig ist der Kraftangriff mit einer regelmäßig konvex polygonalen Außenkontur 26 ausgebildet. Beispielsweise ist, entsprechend den Ausführungsbeispielen in den Figuren 3 und 9, der Kraftangriff als Sechskantprofil ausgebildet, was insbesondere für die Drehmomentübertragung mit einem entsprechenden Werkzeug vorteilhaft ist. Bevorzugt ist dabei zumindest ein Zahn 42 der Einlegehülse 20 einem Eckpunkt 44 der polygonalen Außenkontur 26 zugeordnet und erstreckt sich, gemäß einer vorteilhaften Ausbildung, radial zu diesem zugeordneten Eckpunkt 44. Insbesondere in Figur 9 ist diese Ausführungsmöglichkeit dargestellt.

Gemäß einer weiteren Ausführung sind die Zähne 42 nicht an die Außenkontur 26 des Kraftangriffs angepasst. Das hat den Vorteil, dass die Einlegehülse nicht in Bezug auf die Außenkontur 26 des Schraubteiles 1 positioniert und ausgerichtet werden muss. Insbesondere die Ausführungen der unverformten Blechteile 32, wie sie in den Figuren 6 und 7 dargestellt sind, eignen sich auf Grund ihres homogenen Zahnprofils für eine derartige, an die Außenkontur 26 unbestimmte Anordnung der Einlegehülse.

Ebenfalls in Figur 9 ist eine weitere bevorzugte Variante dargestellt, gemäß welcher die Endabschnitte 42a der Zähne 42 der Einlegehülse 20, welche einem Eckpunkt 44 zugeordnet sind, in Richtung des Eckpunkts in einem Winkel zusammenlaufend ausgebildet sind. Es hat sich dabei als vorteilhaft erwiesen, wenn der Winkel, in welchem der jeweilige Endabschnitt 42a zusammenläuft, einem Innenwinkel entspricht, welchen die zwei in diesem Eckpunkt 44 zusammenlaufenden Seiten 46 der polygonalen Außenkontur 26 einschließen. Insbesondere kann sich durch diese Ausführung der jeweilige Zahn 42 über eine große radiale Distanz bis in die Eckpunkte 44 des Kraftangriffs erstrecken, so dass ein auf den Kraftangriff wirkendes Drehmoment besser aufgenommen werden kann.

Unter diesem vorteilhaften Aspekt sieht eine alternative oder ergänzende Ausführung vor, dass bei dem Kraftangriff, welcher mit der regelmäßig konvex polygonalen Außenkontur 26 ausgebildet ist, vorteilhaft zumindest ein Zahn 42 einer Seite 46 der polygonalen Außenkontur 26 zugeordnet ist. Diese Ausführung ist in Kombination mit der vorgenannten Ausführung in Figur 9 dargestellt. Insbesondere erstreckt sich der jeweilige Zahn 42 in Richtung eines Punktes auf der jeweiligen Seite 46, wobei der Punkt auf einer halben Strecke der Seite 46 angeordnet ist und der Endabschnitt 42a des Zahns 42 insbesondere eine parallel zur jeweiligen Seite 46 verlaufende Stirnfläche 48 aufweist. Wie in Figur 9 dargestellt, kann sich der Zahn 42 durch seine parallele Stirnfläche 48 möglichst nah an die Seite 46 der Außenkontur 26 des Kraftangriffs annähern.

Zweckmäßig ist die Einlegehülse 20 derart ausgebildet und im Grundkörper angeordnet, dass die Zähne 42 zumindest mit ihren Endabschnitten in einem Bereich zwischen einer Mitte der axialen Erstreckung des Montageabschnitts und einem gegen die Einsteckrichtung E betrachteten oberen Drittel der axialen Erstreckung des Montageabschnitts 22 angeordnet sind.

Besonders vorteilhaft weisen die Stege 38 und/oder Zähne 42 jeweils einen Übergangsabschnitt 50 zwischen einer hülsenförmigen Basis 52 der Einlegehülse 20 und ihrem jeweiligen Endabschnitt 38a, 42a auf. Diese vorteilhafte Ausführung ist in den Figuren 1, 4 und 5 bei den Zähnen dargestellt. Der Übergangsabschnitt 50 schließt dabei schräg zur Basis 52 der Einlegehülse 20 verlaufend einen ersten Winkel mit der Basis 52 der Einlegehülse 20 und einen zweiten Winkel mit dem jeweiligen Endabschnitt 38a, 42a ein. Insbesondere ist der Übergangsabschnitt 50 derart bemessen und ausgerichtet, dass sich der Endabschnitt 38a, 42a senkrecht zum Innenkanal 6 erstreckt. Vorteilhaft hat sich ein 60°-Winkel für den ersten Winkel, welchen der Übergangsabschnitt 50 mit der Basis 52 einschließt, erwiesen. Der Übergangsabschnitt 50 ermöglicht eine vorteilhafte Anpassung der Einlegehülse 20 an einen Durchmesserwechsel des Innenkanals 6 im Montageabschnitt 22, wie in den Figuren 1 und 4 dargestellt.

Alternativ zu einer Ausbildung des Übergangsabschnitts 50 mit zwei Winkeln kann der Übergangsabschnitt 50, wie entsprechend in den Figuren 1, 4 und 5 in Bezug auf die Stege 38 dargestellt, verrundet ausgebildet sein.

Entsprechend dem Vorgenannten ist das Leitungssystemelement 8 vorzugsweise in die Einsteckrichtung E in den Innenkanal 6 einsteckbar und im Innenkanal 6 arretierbar. Insbesondere für Druckanwendungen, z. B. bei der Verwendung in einem Druckluftsystem, ist die Ausbildung von kontrollierten Leckagepfaden vorteilhaft. Zwecks deren Bildung sind in der Umfangsfläche des Innenkanals 6 sich axial erstreckende Ausnehmungen 54 angeordnet. Insbesondere in den Figuren 1 und 3 ist diese vorteilhafte Ausbildung von Ausnehmungen 54, welche Leckagepfade bilden, dargestellt. Bei einer Fehlmontage oder einem Überdruck im Leitungssystem ermöglichen die Leckagepfade einen kontrollierten und optisch und/oder akustisch wahrnehmbaren Austritt eines Fluids.

Um die vorgenannten Ausführungen zu ermöglichen, hat es sich als vorteilhaft herausgestellt, wenn die Einlegehülse 20 aus einem metallischen Werkstoff, insbesondere einem VA-Stahl oder Aluminium oder einem Organo-Blech ausgebildet ist. Zweckmäßig besteht das Organoblech, insbesondere aus einem Laminat aus Fasern, vorzugsweise Kohle- oder Glasfasern, mit Kunststoff, zweckmäßig ein Polyamid. Zweckmäßig bieten diese Werkstoffe einen hervorragenden Schutz vor durch Korrosion bedingten Aufdickungen, welche zum Aufplatzen des Schraubteils 1 führen könnten. Dieser Schutz ist besonders von Vorteil, da die (plastifizierte) polymere Masse 2 Feuchtigkeit zu einem geringen Anteil aufweisen kann.

Bevorzugt weist die Fasern enthaltende plastifizierte polymere Masse 2 des Grundkörpers einen Volumenanteil an Fasern im Bereich von 2,5 % bis 75 %, insbesondere 14 % bis 40 % und/oder einen Massenanteil an Fasern von 30 % bis 75 %, bevorzugt 50 % bis 65 %, auf. Diese Massen- bzw. Volumenverhältnisse sind besonders vorteilhaft für die Stabilität des Schraubteils 1.

Ebenfalls für die Stabilität des Schraubteils 1 als vorteilhaft hat sich gezeigt, wenn gemäß einer vorteilhaften Ausführung die Fasern eine Länge im Bereich von 0,1 mm bis 10 mm aufweisen, vorzugsweise die Fasern als Kurzfasern mit einer Länge im Bereich von 0,2 mm bis 0,5 mm oder als Langfasern mit einer Länge im Bereich von 1 mm bis 10 mm ausgebildet sind und/oder die Fasern einen mittleren Durchmesser im Bereich von etwa 3 µm bis 35 µm, bevorzugt einen mittleren Durchmesser im Bereich von 5 µm bis 20 µm, aufweisen. Insbesondere bei einem Schraubteil 1 mit einer Einlegehülse 20, welche die Öffnungen 30 aufweist, ist die Faserlänge vorzugsweise kleiner oder ungefähr gleich, insbesondere maximal gleich der Größe der Öffnung 30, insbesondere dem Lochkreisdurchmesser.

Als Fasern können vorteilhaft amorphe Fasern, wie Glasfasern, anisotrope Fasern, wie Kohlenstofffasern, und/oder Aramidfasern in der polymeren Masse 2 eingesetzt werden.

Gemäß einem erfindungsgemäßes Verfahren zur Herstellung des Schraubteils 1 nach zumindest einer der vorgenannten Ausführungen den Schraubteils 1 wird das Schraubteil 1 mit einem Spritzgussverfahren hergestellt, welches lediglich einen Anspritzpunkt zum Einspritzen der polymeren Masse 2 vorsieht.

Vorteilhaft für die Herstellung ist zudem, wenn der Anspritzpunkt zum Innenkanal des herzustellenden Schraubteils derart abgewinkelt angeordnet wird, dass die polymere Masse in einem Winkel zum Innenkanal weisend in ein geschlossenes Formwerkzeug eingespritzt wird. Zweckmäßig hat das abgewinkelte Einspritzen den Vorteil, dass im Bereich des Innenkanals, welcher durch den senkrecht in Einsteckrichtung einführbaren Kernteil gebildet wird, mehr freier Raum für das Kernteil zur Verfügung steht. Diese Ausführung ermöglicht dadurch insbesondere, dass der entsprechende Kernteil des Formwerkzeugs mittels einer Kernkühlung aktiv gekühlt wird. Die Kernkühlung erhöht vorteilhaft die Fertigungsgeschwindigkeit und verlängert die Standzeit des Formwerkzeugs, insbesondere des Kernteils. In Figur 10 sind der Anspritzpunkt und die Einspritzrichtung der polymeren Masse 2 mit dem Pfeil A gekennzeichnet.

Insbesondere wird bei dem Verfahren zum Herstellen des Schraubteils ein Heißkanalsystem zum Spritzgießen verwendet, welches in Kombination mit einem Kernteil mit einer Kernkühlung zu einer besonders effizienten Fertigung führt.

Die Erfindung ist in dem beigefügten Satz von Ansprüchen definiert.

### Bezugszeichenliste

- 1: Schraubteil
- 2: Polymere Masse
- 4: Außengewinde
- 6: Innenkanal
- 8: Leitungssystemelement
- 10: Dichtabschnitt
- 12: Stützabschnitt
- 14: Halteabschnitt
- 16: Außenringwulst
- 18: Verriegelungskäfig
- 20: Einlegehülse
- 22: Montageabschnitt
- 24: Gewindeabschnitt
- 26: Außenkontur
- 28: Umfangswandung
- 30: Öffnung
- 32: Blechteil
- 34: Kontur
- 36: Außenkante
- 38: Steg
- 38a: Endabschnitt des Stegs
- 38b: Abgerundeter Endabschnitt des Stegs
- 39: Schieber des Formwerkzeugs
- 40: Nut
- 41: Kernteil
- 42: Zahn
- 42a: Endabschnitt des Zahns
- 43: Hinterschnitt
- 44: Eckpunkt
- 45: Schrägfläche
- 46: Seite der Außenkontur
- 48: Stirnfläche
- 50: Übergangsabschnitt
- 52: Hülsenförmige Basis der Einlegehülse
- 54: Ausnehmung
- E: Einsteckrichtung
- A: Einspritzrichtung

## Patentansprüche

1. Schraubteil (1) mit einem ringförmigen Querschnitt, insbesondere eine Hohlschraube oder eine Mutter, aufweisend einen hohlzylindrischen und zumindest teilweise aus einer Fasern enthaltenden plastifizierten polymeren Masse (2) spritzgegossenen Grundkörper, wobei der Grundkörper mindestens ein Innengewinde und/oder ein Außengewinde (4) und einen Innenkanal (6) zur Anordnung und/oder Durchführung eines Leitungssystemelements (8) in eine Einsteckrichtung (E) aufweist, wobei der Innenkanal (6) zumindest einen Dichtabschnitt (10) zur Anordnung einer Umfangsdichtung zur Abdichtung zwischen Innenkanal (6) und Leitungssystemelement (8) und/oder zumindest einen Stützabschnitt (12) zur Stützung und/oder Führung des Leitungssystemelements (8) und/oder zumindest einen Halteabschnitt (14) zur direkten oder indirekten Arretierung des Leitungssystemelements (8) ausgebildet hat,
**dadurch gekennzeichnet, dass**
in dem Grundkörper koaxial zum Innenkanal (6) eine Einlegehülse (20) angeordnet ist, welche zumindest teilweise von der polymeren Masse (2) umspritzt ist, so dass die Einlegehülse (20) zumindest teilweise radial zum Innenkanal (6) weisend und radial vom Innenkanal (6) abweisend von der polymeren Masse (2) umgeben ist und die Einlegehülse (20) zumindest an einem axialen Ende zumindest zwei, vorzugsweise drei oder mehr über den Umfang der Einlegehülse (20) verteilte Stege (38) ausgebildet hat.

2. Schraubteil (1) nach Anspruch 1,
**dadurch gekennzeichnet, dass** der Grundkörper einen sich axial erstreckenden Montageabschnitt (22) und einen sich axial erstreckenden Gewindeabschnitt (24) aufweist, wobei der Grundkörper im Montageabschnitt (22) einen Kraftangriff aufweist und auf einer Außenwand im Gewindeabschnitt (24) ein Außengewinde (4) aufweist, wobei die Einlegehülse (20) im Grundkörper zumindest teilweise in dem Montageabschnitt (22) und zumindest teilweise in dem Gewindeabschnitt (24) angeordnet ist.

3. Schraubteil (1) mit einem ringförmigen Querschnitt, insbesondere eine Hohlschraube oder eine Mutter, aufweisend einen hohlzylindrischen und zumindest teilweise aus einer Fasern enthaltenden plastifizierten polymeren Masse (2) spritzgegossenen Grundkörper, wobei der Grundkörper mindestens ein Innengewinde und/oder ein Außengewinde (4) und einen Innenkanal (6) zur Anordnung und/oder Durchführung eines Leitungssystemelements (8) in eine Einsteckrichtung (E) aufweist, wobei der Innenkanal (6) zumindest einen Dichtabschnitt (10) zur Anordnung einer Umfangsdichtung zur Abdichtung zwischen Innenkanal (6) und Leitungssystemelement (8) und/oder zumindest einen Stützabschnitt (12) zur Stützung und/oder Führung des Leitungssystemelements (8) und/oder zumindest einen Halteabschnitt (14) zur direkten oder indirekten Arretierung des Leitungssystemelements (8) ausgebildet hat,
**dadurch gekennzeichnet, dass**
in dem Grundkörper koaxial zum Innenkanal (6) eine Einlegehülse (20) angeordnet ist, welche zumindest teilweise von der polymeren Masse (2) umspritzt ist, so dass die Einlegehülse (20) zumindest teilweise radial zum Innenkanal (6) weisend und radial vom Innenkanal (6) abweisend von der polymeren Masse (2) umgeben ist und der Grundkörper einen sich axial erstreckenden Montageabschnitt (22) und einen sich axial erstreckenden Gewindeabschnitt (24) aufweist, wobei der Grundkörper im Montageabschnitt (22) einen Kraftangriff aufweist und auf einer Außenwand im Gewindeabschnitt (24) ein Außengewinde (4) aufweist, wobei die Einlegehülse (20) im Grundkörper zumindest teilweise in dem Montageabschnitt (22) und zumindest teilweise in dem Gewindeabschnitt (24) angeordnet ist und die Einlegehülse (20) im Montagebereich zumindest sechs, vorzugsweise 12, über den Umfang der Einlegehülse (20) verteilte Zähne (42) ausgebildet hat, welche sich zumindest mit einem Endabschnitt nach außen in den Kraftangriff erstrecken.

4. Schraubteil (1) nach Anspruch 3,
**dadurch gekennzeichnet, dass** die Endabschnitte der Zähne (42) sich zum Kraftangriff weisend derart verbreitern, dass in einer Aufsicht axial zum Innenkanal (6) die Endabschnitte der Zähne (42) derart trapezförmig ausgebildet sind, dass die Endabschnitte der Zähne (42) zum Innenkanal (6) weisend einen Hinterschnitt (43) aufweisen.

5. Schraubteil (1) nach Anspruch 4,
**dadurch gekennzeichnet, dass** der Kraftangriff mit einer regelmäßig konvex polygonalen Außenkontur (26) ausgebildet ist, wobei zumindest ein Zahn (42) der Einlegehülse (20) einem Eckpunkt (44) der polygonalen Außenkontur (26) zugeordnet ist und sich radial zu diesem zugeordneten Eckpunkt (44) erstreckt.

6. Schraubteil (1) nach Anspruch 5,
**dadurch gekennzeichnet, dass** die Endabschnitte der Zähne (42) der Einlegehülse (20), welche einem Eckpunkt (44) zugeordnet sind, in Richtung des Eckpunkts in einem Winkel zusammenlaufend ausgebildet sind, wobei der Winkel einem Innenwinkel entspricht, welchen die zwei in diesem Eckpunkt (44) zusammenlaufenden Seiten (46) der polygonalen Außenkontur (26) einschließen.

7. Schraubteil (1) nach einem der Ansprüche 3 bis 6,
**dadurch gekennzeichnet, dass** der Kraftangriff mit einer regelmäßig konvex polygonalen Außenkontur (26) ausgebildet ist, wobei zumindest ein Zahn (42) einer Seite (46) der polygonalen Außenkontur (26) zugeordnet ist, wobei sich der jeweilige Zahn (42) in Richtung eines Punktes auf der jeweiligen Seite (46) erstreckt, welcher auf einer halben Strecke der Seite (46) angeordnet ist, und der Endabschnitt des Zahns (42) insbesondere eine parallel zur jeweiligen Seite (46) verlaufende Stirnfläche (48) aufweist.

8. Schraubteil (1) nach einem der Ansprüche 3 bis 7,
**dadurch gekennzeichnet, dass** die Einlegehülse (20) zumindest an einem axialen Ende zumindest zwei, vorzugsweise drei oder mehr über den Umfang der Einlegehülse (20) verteilte Stege (38) ausgebildet hat.

9. Schraubteil (1) nach einem der Ansprüche 1, 2 oder 8,
**dadurch gekennzeichnet, dass** zumindest ein Steg (38), insbesondere alle Stege (38), zum Innenkanal (6) weisend ausgebildet sind.

10. Schraubteil (1) nach Anspruch 9,
**dadurch gekennzeichnet, dass** zumindest zwei, vorzugsweise drei Stege (38) jeweils mit einem zum Innenkanal (6) weisenden Endabschnitt aus der polymeren Masse (2) in dem Stützabschnitt (12) oder einem funktionslosen Abschnitt des Innenkanals (6) herausragen, wobei der Stützabschnitt (12) oder der funktionslose Abschnitt des Innenkanals (6) axial benachbart zu dem Dichtabschnitt (10) und/oder dem Halteabschnitt (14) angeordnet ist und nicht der Anlage einer Umfangsdichtung oder der Arretierung des Leitungssystemelements (8) dient.

11. Schraubteil (1) nach Anspruch 10,
**dadurch gekennzeichnet, dass** in einer Umfangsfläche des Innenkanals (6) zumindest eine axial verlaufende Nut (40) ausgebildet ist, in der einer der Stege (38) aus einem Nutgrund herausragt, wobei der Steg (38) maximal eine radiale Höhe aufweist die einer Tiefe der Nut (40) entspricht.

12. Schraubteil (1) nach einem der Ansprüche 1, 2 oder 8 bis 11,
**dadurch gekennzeichnet, dass** zumindest ein Steg (38) radial vom Innenkanal (6) nach außen weisend ausgebildet ist.

13. Schraubteil (1) nach einem der Ansprüche 1, 2 oder 8 bis 12,
**dadurch gekennzeichnet, dass** zumindest ein Steg (38) axial zum Innenkanal (6) weisend ausgebildet ist.

14. Schraubteil (1) nach einem der Ansprüche 1 bis 13,
**dadurch gekennzeichnet, dass** die Einlegehülse (20) in einer Aufsicht axial zum Innenkanal (6) ein umfänglich geschlossenes Ringprofil aufweist.

15. Schraubteil (1) nach einem der Ansprüche 1 bis 14,
**dadurch gekennzeichnet, dass** die Einlegehülse (20) umfangsgemäß in einer Umfangswandung (28) verteilte Öffnungen (30) aufweist.

16. Schraubteil (1) nach einem der Ansprüche 1 bis 15,
**dadurch gekennzeichnet, dass** die Einlegehülse (20) als ein Blechteil (32) ausgebildet ist, welches eine hohlzylindrische Form aufweist.

17. Schraubteil (1) nach Anspruch 16,
**dadurch gekennzeichnet, dass** die Einlegehülse (20) als ein skelettartiges Tragwerk mit Stützen und Trägern ausgebildet ist, wobei die Öffnungen (30) als Polygone von den Stützen und Trägern umschlossen ausgebildet sind.

18. Schraubteil (1) nach einem der Ansprüche 1 bis 17,
**dadurch gekennzeichnet, dass** die Einlegehülse (20) aus einem zu einer Hülse gebogenen Biegeteil gebildet ist, und zwei zusammengebogene Außenkanten (36) des Biegeteils jeweils mit einer Kontur (34) zum gegenseitigen Verbinden formschlüssig ineinandergreifen.

19. Schraubteil (1) nach einem der Ansprüche 1 bis 18,
**dadurch gekennzeichnet, dass** die Einlegehülse (20) aus einem zu einer Hülse gebogenen Biegeteil gebildet ist, wobei zwei zusammengebogene Außenkanten (36) des Biegeteils stoffschlüssig, insbesondere durch Schweißen, miteinander verbunden sind.

20. Schraubteil (1) nach einem der Ansprüche 1 bis 19,
**dadurch gekennzeichnet, dass** die Einlegehülse (20) sich konusartig in die Einsteckrichtung (E) weisend im Durchmesser verjüngend ausgebildet ist.

21. Schraubteil (1) nach einem der Ansprüche 1 bis 20,
**dadurch gekennzeichnet, dass** die Stege (38) und/oder Zähne (42) jeweils einen Übergangsabschnitt (50) zwischen einer hülsenförmigen Basis (52) der Einlegehülse (20) und ihrem jeweiligen Endabschnitt aufweisen, wobei der Übergangsabschnitt (50) schräg zur Basis (52) der Einlegehülse (20) verlaufend einen ersten Winkel mit der Basis (52) der Einlegehülse (20) und einen zweiten Winkel mit dem Endabschnitt einschließt, und wobei sich der Endabschnitt senkrecht zum Innenkanal (6) erstreckt.

22. Schraubteil (1) nach einem der Ansprüche 1 bis 21,
**dadurch gekennzeichnet, dass** das Leitungssystemelement (8) die Einsteckrichtung (E) in den Innenkanal (6) einsteckbar und im Innenkanal (6) arretierbar ist, wobei in einer Umfangsfläche des Innenkanals (6) sich axial erstreckende Ausnehmungen (54) angeordnet sind, welche sich zumindest teilweise über einen Dichtabschnitt (10) und einen gegen die Einsteckrichtung (E) zum Dichtabschnitt (10) benachbarten Abschnitt des Innenkanals (6) erstrecken.

23. Schraubteil (1) nach einem der Ansprüche 1 bis 22,
**dadurch gekennzeichnet, dass** die Einlegehülse (20) aus einem metallischen Werkstoff, insbesondere einem VA-Stahl oder Aluminium, ausgebildet ist.

24. Schraubteil (1) nach einem der Ansprüche 1 bis 23,
**dadurch gekennzeichnet, dass** die Einlegehülse (20) aus einem Organo-Blech ausgebildet ist, insbesondere aus einem Laminat aus Fasern, vorzugsweise Kohle- oder Glasfasern, mit Kunststoff, zweckmäßig ein Polyamid.

25. Schraubteil (1) nach einem der Ansprüche 1 bis 24,
**dadurch gekennzeichnet, dass** die Fasern enthaltende plastifizierte polymere Masse (2) des Grundkörpers einen Volumenanteil an Fasern im Bereich von 2,5 % bis 75 %, insbesondere 14 % bis 40 % und/oder einem Massenanteil an Fasern von 30 % bis 75 %, bevorzugt 50 % bis 65 %, aufweist.

26. Schraubteil (1) nach einem der Ansprüche 1 bis 25,
**dadurch gekennzeichnet, dass** die Fasern eine Länge im Bereich von 0,1 mm bis 10 mm aufweisen, vorzugsweise die Fasern als Kurzfasern mit einer Länge im Bereich von 0,2 mm bis 0,5 mm oder als Langfasern mit einer Länge im Bereich von 1 mm bis 10 mm ausgebildet sind und/oder die Fasern einen mittleren Durchmesser im Bereich von etwa 3 µm bis 35 µm, bevorzugt einen mittleren Durchmesser im Bereich von 5 µm bis 20 µm, aufweisen.

27. Verfahren zur Herstellung eines Schraubteils (1) mit den Merkmalen nach einem der Ansprüche 1 bis 26,
**dadurch gekennzeichnet, dass** das Schraubteil (1) mit einem Spritzgussverfahren hergestellt wird, welches lediglich einen Anspritzpunkt zum Einspritzen der polymeren Masse vorsieht.

28. Verfahren nach Anspruch 27,
**dadurch gekennzeichnet, dass** der Anspritzpunkt zum Innenkanal (6) des herzustellenden Schraubteils (1) derart abgewinkelt angeordnet wird, dass die polymere Masse in einem Winkel zum Innenkanal (6) weisend in ein geschlossenes Formwerkzeug eingespritzt wird und ein den Innenkanal (6) formgebender Kernteil des Formwerkzeugs mittels einer Kernkühlung aktiv gekühlt wird.

29. Verfahren nach Anspruch 27 oder 28,
**dadurch gekennzeichnet, dass** ein Heißkanalsystem zum Spritzgießen des Schraubteils (1) verwendet wird.

## Claims

1. Screw part (1) with an annular cross-section, in particular a hollow screw or a nut, comprising a base element which is hollow cylindrical and at least partially injection-molded from a plasticized polymeric mass (2) containing fibers, the base element having at least one internal thread and/or one external thread (4) and an internal channel (6) for arranging and/or passing through a conduit system element (8) in an insertion direction (E), wherein the inner channel (6) has formed at least one sealing section (10) for arranging a circumferential seal for sealing between the inner channel (6) and the conduit system element (8) and/or at least one support section (12) for supporting and/or guiding the conduit system element (8) and/or at least one retaining section (14) for directly or indirectly arresting the conduit system element (8)
**characterized in that**
an insertion sleeve (20) is arranged in the base element coaxially with the inner channel (6), which insertion sleeve (20) is at least partially encapsulated by the polymeric mass (2), so that the insertion sleeve (20) is at least partially surrounded by the polymeric mass (2) radially facing towards the inner channel (6) and radially away from the inner channel (6) and that the insertion sleeve (20) has at least at one axial end at least two, preferably three or more webs (38) distributed over the circumference of the insertion sleeve (20).

2. Screw part (1) according to claim 1,
**characterized in that**
the base element has an axially extending mounting section (22) and an axially extending threaded section (24), the base element having a force engagement in the mounting section (22) and having an external thread (4) on an outer wall in the threaded section (24), the insertion sleeve (20) being arranged in the base element at least partially in the mounting section (22) and at least partially in the threaded section (24).

3. Screw part (1) with an annular cross-section, in particular a hollow screw or a nut, comprising a base element which is hollow cylindrical and at least partially injection-molded from a plasticized polymeric mass (2) containing fibers, the base element having at least one internal thread and/or one external thread (4) and an internal channel (6) for arranging and/or passing through a conduit system element (8) in an insertion direction (E), wherein the inner channel (6) has formed at least one sealing section (10) for arranging a circumferential seal for sealing between the inner channel (6) and the conduit system element (8) and/or at least one support section (12) for supporting and/or guiding the conduit system element (8) and/or at least one retaining section (14) for directly or indirectly arresting the conduit system element (8) **characterized in that**
an insertion sleeve (20) is arranged in the base element coaxially with the inner channel (6), which insertion sleeve (20) is at least partially encapsulated by the polymeric mass (2), so that the insertion sleeve (20) is at least partially surrounded by the polymeric mass (2) radially facing towards the inner channel (6) and radially away from the inner channel (6), wherein the base element has an axially extending mounting section (22) and an axially extending threaded section (24), the base element having a force engagement in the mounting section (22) and having an external thread (4) on an outer wall in the threaded section (24), the insertion sleeve (20) being arranged in the base element at least partially in the mounting section (22) and at least partially in the threaded section (24), and the insertion sleeve (20) has in the mounting section at least six, preferably twelve, teeth (42) distributed over the circumference of the insertion sleeve (20), which teeth (42) extend at least with one end section outwardly into the force engagement

4. Screw part (1) according to claim 3,
**characterized in that**
the end sections of the teeth (42) widen toward the force engagement in such a way that in a top view axially to the inner channel (6) the end sections of the teeth (42) are formed trapezoidal in such a way that the end sections of the teeth (42) facing the inner channel (6) have an undercut (43).

5. Screw part (1) according to claim 4,
**characterized in that**
the force engagement is formed with a regularly convex polygonal outer contour (26), at least one tooth (42) of the insertion sleeve (20) being associated with a corner point (44) of the polygonal outer contour (26) and extending radially to this associated corner point (44).

6. Screw part (1) according to claim 5,
**characterized in that**
the end sections of the teeth (42) of the insertion sleeve (20), which are associated with a corner point (44), are formed converging at an angle in the direction of the corner point, the angle corresponding to an inner angle which enclose the two sides (46) of the polygonal outer contour (26) converging at this corner point (44).

7. Screw part (1) according to one of claims 3 to 6,
**characterized in that**
the force engagement is formed with a regularly convex polygonal outer contour (26), at least one tooth (42) being associated with one side (46) of the polygonal outer contour (26), the respective tooth (42) extending in the direction of a point on the respective side (46) which is Icated halfway along the side (46), and the end section of the tooth (42) having in particular an end face (48) extending parallel to the respective side (46).

8. Screw part (1) according to one of claims 3 to 7,
**characterized in that**
the insertion sleeve (20) has at least at one axial end at least two, preferably three or more webs (38) distributed over the circumference of the insertion sleeve (20).

9. Screw part (1) according to one of claims 1, 2 or 8,
**characterized in that** at least one web (38), in particular all webs (38), are formed facing the inner channel (6).

10. Screw part (1) according to claim 9,
**characterized in that** at least two, preferably three webs (38) each project with an end section facing the inner channel (6) from the polymeric mass (2) in the support section (12) or a non-functional section of the inner channel (6), the support section (12) or the non-functional section of the inner channel (6) being arranged axially adjacent to the sealing section (10) and/or the retaining section (14) and not serving to apply a circumferential seal or to lock the conduit system element (8).

11. Screw part (1) according to claim 10,
**characterized in that** at least one axially extending groove (40) is formed in a circumferential section of the inner channel (6), in which groove one of the webs (38) projects from a groove base, the web (38) having at most a radial height corresponding to a depth of the groove (40).

12. Screw part (1) according to one of claims 1, 2 or 8 to 11,
**characterized in that** at least one web (38) is designed to point radially outwards from the inner channel (6).

13. Screw part (1) according to one of claims 1, 2 or 8 to 12,
**characterized in that** at least one web (38) is designed to point axially towards the inner channel (6).

14. Screw part (1) according to one of claims 1 to 13,
**characterized in that**
the insertion sleeve (20) has a circumferentially closed ring profile in a top view axial to the inner channel (6).

15. Screw part (1) according to one of claims 1 to 14,
**characterized in that**
the insertion sleeve (20) has openings (30) distributed circumferentially in a circumferential wall (28).

16. Screw part (1) according to one of claims 1 to 15,
**characterized in that**
the insertion sleeve (20) is formed as a sheet metal part (32) which has a hollow cylindrical shape.

17. Screw part (1) according to claim 16,
**characterized in that**
the insertion sleeve (20) is designed as a skeleton-like supporting structure with supports and beams, the openings (30) being designed as polygons enclosed by the supports and beams.

18. Screw part (1) according to one of claims 1 to 17,
**characterized in that** the insertion sleeve (20) is formed from a bending element bent into a sleeve, and two outer edges (36) of the bending element bent together engage positively with a contour (34) for mutual connection in each case.

19. Screw part (1) according to one of claims 1 to 18,
**characterized in that**
the insertion sleeve (20) is formed from a bending element bent into a sleeve, two bent-together outer edges (36) of the bending element being connected to one another in a materially locking manner, in particular by welding.

20. Screw part (1) according to one of claims 1 to 19,
**characterized in that**
the insertion sleeve (20) is designed to taper in diameter in the manner of a cone pointing in the insertion direction (E).

21. Screw part (1) according to one of claims 1 to 20,
**characterized in that** the webs (38) and/or teeth (42) each have a transition section (50) between a sleeve-shaped base (52) of the insertion sleeve (20) and their respective end section, the transition section (50) extending obliquely to the base (52) of the insertion sleeve (20) and forming a first angle with the base (52) of the insertion sleeve (20) and a second angle with the end section, and the end section extending perpendicularly to the inner channel (6).

22. Screw part (1) according to any one of claims 1 to 21,
**characterized in that** the conduit system element (8) can be inserted into the inner channel (6) in the insertion direction (E) and can be locked in the inner channel (6), axially extending recesses (54) being arranged in a circumferential section of the inner channel (6), which recesses extend at least partially over a sealing section (10) and a section of the inner channel (6) adjacent to the sealing section (10) against the insertion direction (E).

23. Screw part (1) according to any one of claims 1 to 22,
**characterized in that** the insertion sleeve (20) is formed from a metallic material, in particular a VA steel or aluminum.

24. Screw part (1) according to one of claims 1 to 23,
**characterized in that** the insertion sleeve (20) is formed from an organo-sheet, in particular from a laminate of fibers, preferably carbon or glass fibers, with plastic, expediently a polyamide.

25. Screw part (1) according to one of claims 1 to 24,
**characterized in that** the fiber-containing plasticized polymeric mass (2) of the base element has a fiber content by volume in the range from 2.5% to 75%, in particular from 14% to 40%, and/or a fiber content by mass of 30% to 75%, preferably from 50% to 65%.

26. Screw part (1) according to one of claims 1 to 25,
**characterized in that** the fibers have a length in the range from 0.1 mm to 10 mm, preferably the fibers are formed as short fibers having a length in the range from 0.2 mm to 0.5 mm or as long fibers having a length in the range from 1 mm to 10 mm and/or the fibers have an average diameter in the range from about 3 µm to 35 µm, preferably an average diameter in the range from 5 µm to 20 µm.

27. Process for manufacturing a screw part (1) having the features according to any one of claims 1 to 26,
**characterized in that** the screw part (1) is produced by an injection molding process which provides only one injection point for injecting the polymeric mass.

28. Process according to claim 27,
**characterized in that** the injection point is arranged at an angle to the inner channel (6) of the screw part (1) to be produced in such a way that the polymeric mass is injected at an angle to the inner channel (6) into a closed molding tool and a core part of the molding tool that shapes the inner channel (6) is actively cooled by means of a core cooling system.

29. Process according to claim 27 or 28,
**characterized in that** a hot runner system is used for injection molding the screw part (1).

## Revendications

1. Pièce à visser (1) à section transversale circulaire, en particulier vis creuse ou écrou, comprenant un corps de base cylindrique creux moulé par injection, constitué au moins en partie d'une masse polymère plastifiée (2) contenant des fibres, le corps de base comprenant au moins un filetage intérieur et/ou un filetage extérieur (4) et un canal intérieur (6) pour la disposition et/ou le passage d'un élément (8) de système de conduite dans un sens d'insertion (E), le canal intérieur (6) comportant au moins une partie d'étanchéité (10) pour la mise en place d'un joint périphérique destiné à assurer l'étanchéité entre le canal intérieur (6) et l'élément (8) de système de conduite et/ou au moins une partie d'appui (12) pour l'appui et/ou le guidage de l'élément (8) de système de conduite et/ou au moins une partie de retenue (14) pour le blocage direct ou indirect de l'élément (8) de système de conduite,
**caractérisée en ce que**
un manchon inséré (20) est disposé dans le corps de base coaxialement au canal intérieur (6), lequel manchon est au moins partiellement enrobé par la masse polymère (2) de sorte que le manchon inséré (20) est au moins partiellement entouré par la masse polymère (2) en étant orienté au moins partiellement radialement par rapport au canal intérieur (6), et en étant écarté radialement du canal intérieur (6), et le manchon inséré (20) comprend, au moins à une extrémité axiale, au moins deux, de préférence trois ou plus, pattes (38) réparties sur la circonférence du manchon inséré (20).

2. Pièce à visser (1) selon la revendication 1,
**caractérisée en ce que** le corps de base présente une partie de montage (22) s'étendant axialement et une partie filetée (24) s'étendant axialement, le corps de base comprenant un point d'application de force dans la partie de montage (22) et un filetage extérieur (4) sur une paroi extérieure dans la partie filetée (24), le manchon inséré (20), dans le corps de base, étant disposé au moins en partie dans la partie de montage (22) et au moins en partie dans la partie filetée (24).

3. Pièce à visser (1) à section transversale circulaire, en particulier vis creuse ou écrou, comprenant un corps de base cylindrique creux moulé par injection, constitué au moins en partie d'une masse polymère plastifiée (2) contenant des fibres, le corps de base comprenant au moins un filetage intérieur et/ou un filetage extérieur (4) et un canal intérieur (6) pour la disposition et/ou le passage d'un élément (8) de système de conduite dans un sens d'insertion (E), le canal intérieur (6) comportant au moins une partie d'étanchéité (10) pour la mise en place d'un joint périphérique destiné à assurer l'étanchéité entre le canal intérieur (6) et l'élément (8) de système de conduite et/ou au moins une partie d'appui (12) pour l'appui et/ou le guidage de l'élément (8) de système de conduite et/ou au moins une partie de retenue (14) pour le blocage direct ou indirect de l'élément (8) de système de conduite,
**caractérisée en ce que**
un manchon inséré (20) est disposé dans le corps de base coaxialement au canal intérieur (6), lequel manchon inséré est au moins partiellement enrobé par la masse polymère (2) de de sorte que le manchon inséré (20) est au moins partiellement entouré par la masse polymère (2) en étant orienté radialement par rapport au canal intérieur (6) et en étant écarté radialement du canal intérieur (6), et le corps de base présente une partie de montage (22) s'étendant axialement et une partie filetée (24) s'étendant axialement, le corps de base comprenant un point d'application de force dans la partie de montage (22) et un filetage extérieur (4) sur une paroi extérieure dans la partie filetée (24), le manchon inséré (20) étant, disposé dans le corps de base, au moins en partie dans la partie de montage (22) et au moins en partie dans la partie filetée (24) et le manchon inséré (20) comprenant dans la zone de montage au moins six, de préférence 12, dents (42) réparties sur la circonférence du manchon inséré (20), qui s'étendent au moins avec une partie d'extrémité vers l'extérieur dans le point d'application de force.

4. Pièce à visser (1) selon la revendication 3,
**caractérisée en ce que** les parties d'extrémité des dents (42) s'élargissent en direction du point d'application de force de telle sorte que, dans une vue en plan axiale par rapport au canal intérieur (6), les parties d'extrémité des dents (42) sont de forme trapézoïdale de telle sorte que les parties d'extrémité des dents (42) présentent une contre-dépouille (43) en direction du canal intérieur (6).

5. Pièce à visser (1) selon la revendication 4,
**caractérisée en ce que** le point d'application de force est formé avec un contour extérieur polygonal régulièrement convexe (26), au moins une dent (42) du manchon inséré (20) étant associée à un point d'angle (44) du contour extérieur polygonal (26) et s'étendant radialement par rapport à ce point d'angle associé (44).

6. Pièce à visser (1) selon la revendication 5,
**caractérisée en ce que** les parties d'extrémité des dents (42) du manchon inséré (20) qui sont associées à un point d'angle (44) sont formées de manière à converger vers le point d'angle selon un angle qui correspond à un angle intérieur que forment les deux côtés (46) du contour extérieur polygonal (26) qui convergent en ce point d'angle (44).

7. Pièce à visser (1) selon l'une des revendications 3 à 6,
**caractérisée en ce que** le point d'application de force est réalisé avec un contour extérieur polygonal régulièrement convexe (26), au moins une dent (42) d'un côté (46) du contour extérieur polygonal (26) étant associée à la dent respective (42) s'étendant en direction d'un point situé sur le côté respectif (46), qui est disposé à mi-distance du côté (46), et la partie d'extrémité de la dent (42) comprenant en particulier une surface d'extrémité (48) s'étendant parallèlement au côté respectif (46).

8. Pièce à visser (1) selon l'une des revendications 3 à 7,
**caractérisée en ce que** le manchon inséré (20) comporte, au moins à une extrémité axiale, au moins deux, de préférence trois ou plus, pattes (38) réparties sur la circonférence du manchon inséré (20).

9. Pièce à visser (1) selon l'une des revendications 1, 2 ou 8,
**caractérisée en ce qu'au** moins une patte (38), en particulier toutes les pattes (38), sont formées de manière à être orientées vers le canal intérieur (6).

10. Pièce à visser (1) selon la revendication 9,
**caractérisée en ce qu'au** moins deux, de préférence trois, pattes (38) font saillie à partir de la masse polymère (2) dans la partie d'appui (12) ou dans une partie non fonctionnelle du canal intérieur (6), chacune avec une partie d'extrémité tournée vers le canal intérieur (6), la partie d'appui (12) ou la partie sans fonction du canal intérieur (6) étant disposée axialement à proximité de la partie d'étanchéité (10) et/ou de la partie de retenue (14) et ne servant pas à l'application d'un joint périphérique ou au blocage de l'élément (8) de système de conduite.

11. Pièce à visser (1) selon la revendication 10,
**caractérisée en ce qu'**au moins une rainure (40) s'étendant axialement est formée dans une surface périphérique du canal intérieur (6), dans laquelle l'une des pattes (38) fait saillie à partir d'un fond de rainure, la patte (38) comprenant au maximum une hauteur radiale qui correspond à une profondeur de la rainure (40).

12. Pièce à visser (1) selon l'une des revendications 1, 2 ou 8 à 11,
**caractérisée en ce qu'**au moins une patte (38) est formée radialement vers l'extérieur à partir du canal intérieur (6).

13. Pièce à visser (1) selon l'une des revendications 1, 2 ou 8 à 12,
**caractérisée en ce qu'**au moins une patte (38) est formée de manière à être orientée axialement vers le canal intérieur (6).

14. Pièce à visser (1) selon l'une des revendications 1 à 13,
**caractérisée en ce que** le manchon inséré (20) présente, dans une vue de dessus, un profil circulaire fermé sur tout le pourtour, axialement par rapport au canal intérieur (6).

15. Pièce à visser (1) selon l'une des revendications 1 à 14,
**caractérisée en ce que** le manchon inséré (20) présente des ouvertures (30) réparties sur le pourtour dans une paroi périphérique (28).

16. Pièce à visser (1) selon l'une des revendications 1 à 15,
**caractérisée en ce que** le manchon inséré (20) est réalisé sous la forme d'une pièce en tôle (32) qui présente une forme cylindrique creuse.

17. Pièce à visser (1) selon la revendication 16,
**caractérisée en ce que** le manchon inséré (20) est réalisé sous la forme d'une structure porteuse en forme de squelette avec des supports et des poutres, les ouvertures (30) étant réalisées sous la forme de polygones entourés par les supports et les poutres.

18. Pièce à visser (1) selon l'une des revendications 1 à 17,
**caractérisée en ce que** le manchon inséré (20) est formé d'une pièce pliée en forme de manchon et deux bords extérieurs (36) pliés ensemble de la pièce pliée s'emboîtent par complémentarité de forme avec un contour (34) pour une liaison mutuelle.

19. Pièce à visser (1) selon l'une des revendications 1 à 18,
**caractérisée en ce que** le manchon inséré (20) est formé d'une pièce pliée en forme de manchon, deux bords extérieurs (36) de la pièce pliée étant reliés entre eux par adhérence, en particulier par soudage.

20. Pièce à visser (1) selon l'une des revendications 1 à 19,
**caractérisée en ce que** le manchon inséré (20) est réalisé de manière conique, avec un diamètre qui se rétrécit dans le sens d'insertion (E).

21. Pièce à visser (1) selon l'une des revendications 1 à 20,
**caractérisée en ce que** les pattes (38) et/ou les dents (42) présentent chacune une partie de transition (50) entre une base en forme de manchon (52) du manchon inséré (20) et leur partie d'extrémité respective, la partie de transition (50) s'étendant obliquement par rapport à la base (52) du manchon inséré (20) formant un premier angle avec la base (52) du manchon inséré (20) et un deuxième angle avec la partie d'extrémité, et la partie d'extrémité s'étendant perpendiculairement au canal intérieur (6).

22. Pièce à visser (1) selon l'une des revendications 1 à 21,
**caractérisée en ce que** l'élément (8) de système de conduite est apte à être inséré dans le canal intérieur (6) dans le sens d'insertion (E) et est apte à être bloqué dans le canal intérieur (6), des évidements (54), qui s'étendent axialement dans une surface périphérique du canal intérieur (6), étant disposés dans une surface périphérique de ce canal intérieur, et s'étendant au moins en partie sur une partie d'étanchéité (10) et sur une partie du canal intérieur (6) adjacente à la partie d'étanchéité (10), dans le sens opposé au sens d'insertion (E).

23. Pièce à visser (1) selon l'une des revendications 1 à 22,
**caractérisée en ce que** le manchon inséré (20) est réalisé en un matériau métallique, en particulier en acier VA ou en aluminium.

24. Pièce à visser (1) selon l'une des revendications 1 à 23,
**caractérisée en ce que** le manchon inséré (20) est constitué d'une tôle organique, en particulier d'un stratifié composé de fibres, de préférence des fibres de carbone ou de verre, avec une matière plastique, de préférence un polyamide.

25. Pièce à visser (1) selon l'une des revendications 1 à 24,
**caractérisée en ce que** la masse polymère plastifiée (2) contenant les fibres du corps de base présente une proportion volumique de fibres comprise entre 2,5% et 75%, en particulier entre 14% et 40%, et/ou une proportion massique de fibres comprise entre 30% et 75%, de préférence entre 50% et 65%.

26. Pièce à visser (1) selon l'une des revendications 1 à 25,
**caractérisée en ce que** les fibres ont une longueur comprise entre 0,1mm et 10mm, de préférence les fibres sont réalisées sous forme de fibres courtes ayant une longueur comprise entre 0,2mm et 0,5mm ou sous forme de fibres longues ayant une longueur comprise entre 1mm et 10mm et/ou les fibres ont un diamètre moyen compris entre environ 3µm et 35µm, de préférence un diamètre moyen compris entre 5µm et 20µm.

27. Procédé de fabrication d'une pièce à visser (1) comprenant les caractéristiques selon l'une des revendications 1 à 26,
**caractérisé en ce que** la pièce à visser (1) est fabriquée par un procédé de moulage par injection qui ne prévoit qu'un seul point d'injection pour injecter la masse polymère.

28. Procédé selon la revendication 27,
**caractérisé en ce que** le point d'injection est disposé de manière inclinée par rapport au canal intérieur (6) de la pièce à visser (1) à fabriquer, de telle sorte que la masse polymère soit injectée dans un moule fermé en formant un angle avec le canal intérieur (6) et **en ce qu'**une partie centrale du moule, qui forme le canal intérieur (6), est refroidie activement au moyen d'un système de refroidissement central.

29. Procédé selon la revendication 27 ou la revendication 28,
**caractérisé en ce qu'un** système à canal chaud est utilisé pour le moulage par injection de la pièce à visser (1) .
